# EUROPEAN PATENT SPECIFICATION

(11) **EP 2 735 434 B1**
(45) Date of publication and mention of the grant of the patent: **31.10.2018**
(21) Application number: 12823565.2
(22) Date of filing: 25.04.2012
(51) Int. Cl.: B29D 30/30, B60C 9/22

(54) **METHOD FOR MANUFACTURING PNEUMATIC TIRE**
VERFAHREN ZUR HERSTELLUNG VON LUFTREIFEN
PROCÉDÉ DE FABRICATION DE PNEUMATIQUE

(30) Priority: 18.08.2011 JP 2011178811
(43) Date of publication of application: 28.05.2014
(73) Proprietor: Sumitomo Rubber Industries, Ltd., Kobe-shi, Hyogo 651-0072 (JP)
(72) Inventor: SAKAMOTO Masayuki, Hyogo 651-0072 (JP); NAKAMURA Akihiro, Hyogo 651-0072 (JP); HAYASAKI Naoki, Hyogo 651-0072 (JP); TANAKA Keiji, Hyogo 651-0072 (JP)
(74) Representative: Manitz Finsterwald Patentanwälte PartmbB
(86) International application number: PCT/JP2012/061108
(87) International publication number: WO 2013/024607

(56) References cited:
- JP-A- S6 436 504
- JP-A- S6 436 504
- JP-A- H08 142 226
- JP-A- 2006 255 990
- JP-A- 2008 285 023

## Description

### TECHNICAL FIELD

The present invention relates to methods for manufacturing a pneumatic tire. The features of the preamble of the independent claims are known from JP S64 36504 A. Related technology is known from JP H08 142226 A.

### BACKGROUND ART

A belt of a tire is generally covered with a band. The band includes cords. The cords extend in substantially a circumferential direction and are helically wound. The band has a so-called jointless structure. The band holds the belt. Thus, lifting of the belt is suppressed.

The band is formed by a ribbon being helically wound. The ribbon includes cords and a topping rubber. Tires including bands and manufacturing methods thereof have been variously examined. Examples of such examination are disclosed in JP2-67123, JP2006-176078, JP2009-51417, JP2002-178415, and JP2006-255989.

### CITATION LIST

### PATENT LITERATURE

Patent Literature 1: JP2-67123
Patent Literature 2: JP2006-176078
Patent Literature 3: JP2009-51417
Patent Literature 4: JP2002-178415
Patent Literature 5: JP2006-255989

### SUMMARY OF THE INVENTION

### PROBLEMS TO BE SOLVED BY THE INVENTION

A band may be formed by using two ribbons. In this case, one of the ribbons is helically wound from an equator plane toward a first end of a belt. The other ribbon is helically wound from the equator plane toward a second end of the belt.

After an end of each ribbon is placed on the belt, a drum is rotated. Thus, winding of each ribbon is started. Until the drum makes 3/4 rotation after the start, each ribbon is wound along the equator plane. Then, each ribbon is helically wound. In this manufacturing method, a gap in which no ribbon is present is formed in a portion of the band at the equator plane. The gap causes unevenness which deteriorates the uniformity of a tire.

In this manufacturing method, the winding of each ribbon is stopped at the end of the belt. The termination end of each ribbon is located at a portion at the end of the belt. This band cannot sufficiently hold the portion at the end of the belt. The durability of a tire obtained by this manufacturing method is not sufficient.

An object of the present invention is to provide a pneumatic tire which is excellent in uniformity and durability.

### SOLUTION TO THE PROBLEMS

A method for manufacturing a pneumatic tire according to the present invention is executed by using a former including a cylindrical drum, a first head, and a second head.

The manufacturing method includes the steps of:
(1) winding a sheet around the drum to obtain a belt;
(2) feeding a first ribbon including a first cord from the first head, laminating an end of the first ribbon on the belt at an inner side, in an axial direction, of a first end of the belt, feeding a second ribbon including a second cord from the second head, and laminating an end of the second ribbon on the belt at an inner side, in the axial direction, of a second end of the belt;
(3) helically winding the first ribbon while moving the first head in the axial direction toward the first end of the belt, and helically winding the second ribbon while moving the second head in the axial direction toward the second end of the belt;
(4) winding the first ribbon in a circumferential direction at the first end of the belt and winding the second ribbon in the circumferential direction at the second end of the belt;
(5) further helically winding the first ribbon while moving the first head inward in the axial direction and further helically winding the second ribbon while moving the second head inward in the axial direction; and
(6) winding the first ribbon and the second ribbon such that the first ribbon and the second ribbon intersect each other at a position corresponding to an equator plane of a tire.

Preferably, in the pneumatic tire manufacturing method, a distance in the axial direction from the end of the first ribbon laminated on the belt to the first end of the belt is equal to or greater than 30 mm but equal to or less than 50 mm. A distance in the axial direction from the end of the second ribbon laminated on the belt to the second end of the belt is equal to or greater than 30 mm but equal to or less than 50 mm.

Preferably, in the pneumatic tire manufacturing method, a rotation angle of the drum in winding of the first ribbon and the second ribbon in the circumferential direction is equal to or greater than 180° but equal to or less than 360°.

Preferably, in the pneumatic tire manufacturing method, an initial modulus of the first cord is higher than an initial modulus of the second cord.

Preferably, when a pneumatic tire obtained by the manufacturing method is mounted on a vehicle, the first end of the belt is located at an inner side in a width direction of the vehicle and the second end of the belt is located at an outer side in the width direction of the vehicle.

Preferably, in the pneumatic tire manufacturing method, a width of the first ribbon is equal to or greater than 10 mm but equal to or less than 11 mm. A width of the second ribbon is equal to or greater than 10 mm but equal to or less than 11 mm.

Preferably, in the pneumatic tire manufacturing method, the first ribbon is helically wound at a pitch which is equal to or greater than 9.8 mm but equal to or less than 11.0 mm. The second ribbon is helically wound at a pitch which is equal to or greater than 9.8 mm but equal to or less than 11.0 mm.

A pneumatic tire according to the present invention includes: a tread having an outer surface which forms a tread surface; a pair of sidewalls extending from ends, respectively, of the tread substantially inward in a radial direction; a pair of beads located substantially inward of the sidewalls, respectively, in the radial direction; a carcass extending on and between one of the beads and the other bead along and inward of the tread and the sidewalls; a belt laminated on the carcass at an inner side, in the radial direction, of the tread; and a band located between the belt and the tread and covering the belt. The band includes a first element formed by helically winding a first ribbon and a second element formed by helically winding a second ribbon. An end of the first element is located inward of a first end of the belt in an axial direction. The first element is turned up at the first end of the belt. An end of the second element is located inward of a second end of the belt in the axial direction. The second element is turned up at the second end of the belt. The first element and the second element intersect each other at an equator plane. The first ribbon includes a first cord. In the first element, the first cord extends in substantially a circumferential direction and is helically wound. The second ribbon includes a second cord. In the second element, the second cord extends in substantially the circumferential direction and is helically wound.

### ADVANTAGEOUS EFFECTS OF THE INVENTION

According to the manufacturing method according to the present invention, a pneumatic tire which is excellent in uniformity and durability can be obtained.

### BRIEF DESCRIPTION OF THE DRAWINGS

[FIG. 1] FIG. 1 is a cross-sectional view showing a pneumatic tire obtained by a manufacturing method according to one embodiment of the present invention.
[FIG. 2] FIG. 2 is an enlarged cross-sectional view showing a portion of the tire in FIG. 1.
[FIG. 3] FIG. 3 is an enlarged cross-sectional view showing another portion of the tire in FIG. 1.
[FIG. 4] FIG. 4 is a cross-sectional perspective view showing a portion of a first ribbon used for forming a band of the tire in FIG. 1.
[FIG. 5] FIG. 5 is a cross-sectional perspective view showing a portion of a second ribbon used for forming the band of the tire in FIG. 1.
[FIG. 6] FIG. 6 is a plan view schematically showing a state of manufacture of the tire in FIG. 1.
[FIG. 7] FIG. 7 is a front view of FIG. 6.
[FIG. 8] FIG. 8 is a plan view schematically showing another state of manufacture different from FIG. 6.
[FIG. 9] FIG. 9 is a front view schematically showing another state of manufacture different from FIG. 8.
[FIG. 10] FIG. 10 is a back view of FIG. 9.
[FIG. 11] FIG. 11 is a plan view showing another state of manufacture different from FIGS. 9 and 10.
[FIG. 12] FIG. 12 is a plan view showing another state of manufacture different from FIG. 11.
[FIG. 13] FIG. 13 is a plan view showing another state of manufacture different from FIG. 12.
[FIG. 14] FIG. 14 is a plan view showing another state of manufacture different from FIG. 13.
[FIG. 15] FIG. 15 is a cross-sectional view showing a state of forming a first element which forms a portion of the band.
[FIG. 16] FIG. 16 is a cross-sectional view showing a state of forming a first element which forms another portion of the band.
[FIG. 17] FIG. 17 is a cross-sectional view showing a pneumatic tire obtained by a manufacturing method according to another embodiment of the present invention.
[FIG. 18] FIG. 18 is an enlarged cross-sectional view showing a portion of the tire in FIG. 17.
[FIG. 19] FIG. 19 is an enlarged cross-sectional view showing another portion of the tire in FIG. 17.

### DESCRIPTION OF EMBODIMENTS

The following will describe in detail the present invention based on preferred embodiments with appropriate reference to the drawings.

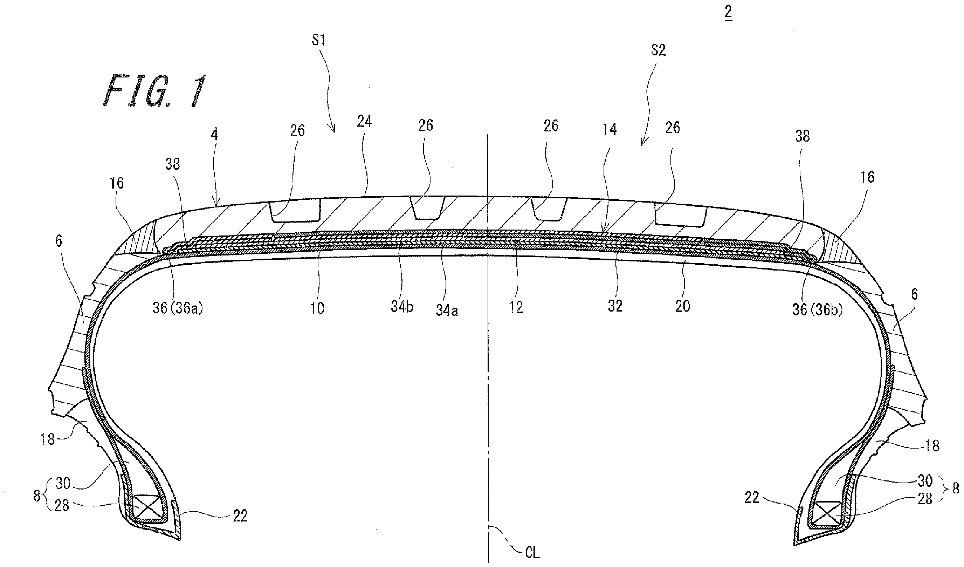

A pneumatic tire 2 shown in FIG. 1 includes a tread 4, sidewalls 6, beads 8, a carcass 10, a belt 12, a band 14, wings 16, clinches 18, an inner liner 20, and chafers 22. The tire 2 is of a tubeless type. The tire 2 is mounted on a passenger car. The tire 2 has a shape which is substantially bilaterally symmetrical about an alternate long and short dash line CL in FIG. 1. The alternate long and short dash line CL represents the equator plane of the tire 2. In FIG. 1, the up-down direction is a radial direction, the right-left direction is an axial direction, and the direction perpendicular to the surface of the sheet is a circumferential direction.

The tread 4 is formed from a crosslinked rubber that is excellent in wear resistance. The tread 4 has a shape projecting outward in the radial direction. The outer surface of the tread 4 forms a tread surface 24. The tread surface 24 comes into contact with a road surface. Grooves 26 are formed on the tread surface 24. A tread pattern is formed by the grooves 26. The grooves 26 may not be formed on the tread surface 24.

The sidewalls 6 extend from ends of the tread 4 substantially inward in the radial direction. The sidewalls 6 are formed from a crosslinked rubber. The sidewalls 6 bend. The sidewalls 6 absorb shocks from a road surface. In addition, the sidewalls 6 prevent injury of the carcass 10.

The beads 8 are located substantially inward of the sidewalls 6 in the radial direction. Each bead 8 includes a core 28 and an apex 30 extending from the core 28 outward in the radial direction. The core 28 has a ring shape. The core 28 is formed by a non-stretchable wire being wound. Typically, a steel wire is used for the core 28. The apex 30 is tapered outward in the radial direction. The apex 30 is formed from a highly hard crosslinked rubber.

The carcass 10 is formed of a carcass ply 32. The carcass ply 32 extends on and between the beads 8 at both sides. The carcass ply 32 extends along and inward of the tread 4 and the sidewalls 6. The carcass ply 32 is turned up around each core 28 from the inner side to the outer side in the axial direction.

The carcass ply 32 includes a large number of cords aligned with each other, and a topping rubber, which are not shown. The absolute value of the angle of each cord relative to the equator plane is generally 70° to 90°. In other words, the carcass 10 has a radial structure. The cords are generally formed from an organic fiber. Examples of preferable organic fibers include polyester fibers, nylon fibers, rayon fibers, polyethylene naphthalate fibers, and aramid fibers. A carcass 10 having a bias structure may be used.

The belt 12 is located outward of the carcass 10 in the radial direction. The belt 12 is laminated on the carcass 10 at an inner side, in the radial direction, of the tread 4. The belt 12 reinforces the carcass 10. The belt 12 includes an inner layer 34a and an outer layer 34b. In the tire 2, the inner layer 34a is wider than the outer layer 34b. Ends 36 of the inner layer 34a are located outward of ends 38 of the outer layer 34b in the axial direction. The ends 36 of the inner layer 34a are ends of the belt 12. It should be noted that the inner layer 34a may be narrower than the outer layer 34b. In this case, the ends 38 of the outer layer 34b are the ends of the belt 12.

Each of the inner layer 34a and the outer layer 34b includes a large number of cords aligned with each other, and a topping rubber, which are not shown. Each cord is tilted relative to the equator plane. The absolute value of the tilt angle is equal to or greater than 10° but equal to or less than 35°. The direction in which each cord of the inner layer 34a is tilted is opposite to the direction in which each cord of the outer layer 34b is tilted. The material of the cords is preferably steel. An organic fiber may be used for the cords.

In the present specification, the end 36a of the belt 12 located at the left side in the surface of the sheet is referred to as a first end. A portion of the tire 2 at the left side of the equator plane at which the first end 36a is located is referred to as a first side S1. The end 36b of the belt 12 located at the right side is referred to as a second end. A portion of the tire 2 at the right side of the equator plane at which the second end 36b is located is referred to as a second side S2. When the tire 2 is mounted on a vehicle, the first side S1 is located at the inner side in the width direction of the vehicle, and the second side S2 is located at the outer side in the width direction of the vehicle.

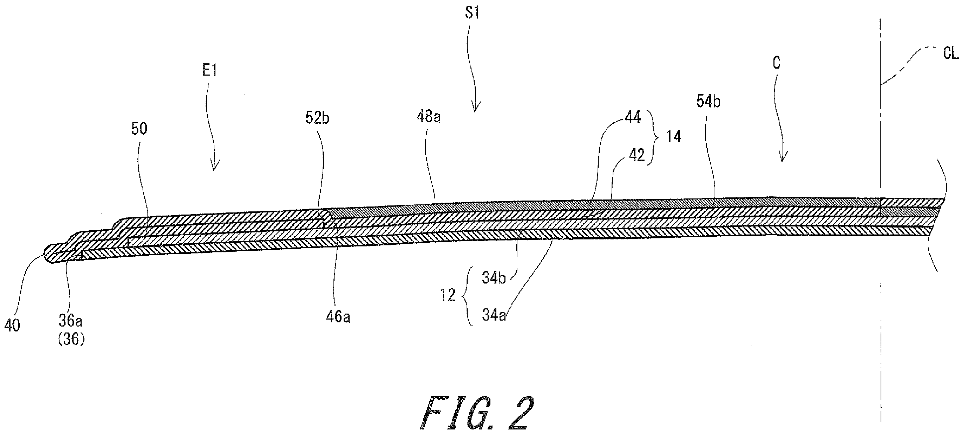

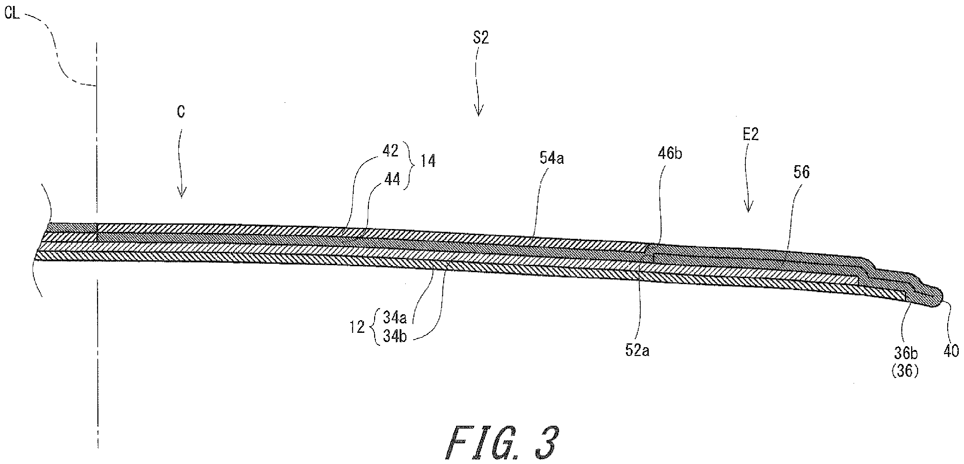

FIG. 2 shows the band 14 in the first side S1 of the tire 2 together with the belt 12. FIG. 3 shows the band 14 in the second side S2 of the tire 2 together with the belt 12.

The band 14 is located between the tread 4 and the belt 12. The band 14 covers the belt 12. As shown, ends 40 of the band 14 are located outward of the ends 36 of the belt 12 in the axial direction.

In the tire 2, the band 14 is composed of a first element 42 and a second element 44. Although not shown, the first element 42 includes first cords and a topping rubber. The second element 44 includes second cords and a topping rubber.

In the first side S1 of the tire 2, the first element 42 is laminated on the belt 12 so as to be located outward of the belt 12 in the radial direction. A first end 46a of the first element 42 is located inward of the first end 36a of the belt 12 in the axial direction. The first element 42 is turned up from the inner side to the outer side in the radial direction near the first end 36a of the belt 12. Due to this turning-up, in the first element 42, a first main body 48a is formed so as to extend in the axial direction from the equator plane toward the first end 36a of the belt 12, and a first turned-up portion 50 is formed so as to extend inward in the axial direction from the first main body 48a. In the tire 2, the first element 42 includes the first main body 48a and the first turned-up portion 50.

In the second side S2, the first element 42 is laminated on the second element 44 so as to be located outward of the second element 44 in the radial direction. In addition to the first main body 48a and the first turned-up portion 50 which are described above, the first element 42 further includes a first main body 48b extending in the axial direction from the equator plane toward the second end 36b of the belt 12. The first element 42 of the tire 2 is composed of the first main body 48a, the first turned-up portion 50, and the first main body 48b.

In the second side S2 of the tire 2, the second element 44 is laminated on the belt 12 so as to be located outward of the belt 12 in the radial direction. A first end 52a of the second element 44 is located inward of the second end 36b of the belt 12 in the axial direction. The second element 44 is turned up from the inner side to the outer side in the radial direction near the second end 36b of the belt 12. Due to this turning-up, in the second element 44, a second main body 54a is formed so as to extend in the axial direction from the equator plane toward the second end 36b of the belt 12, and a second turned-up portion 56 is formed so as to extend inward in the axial direction from the second main body 54a. In the tire 2, the second element 44 includes the second main body 54a and the second turned-up portion 56.

In the first side S1, the second element 44 is laminated on the first element 42 so as to be located outward of the first element 42 in the radial direction. In addition to the second main body 54a and the second turned-up portion 56 which are described above, the second element 44 further includes a second main body 54b extending in the axial direction from the equator plane toward the first end 36a of the belt 12. The second element 44 of the tire 2 is composed of the second main body 54a, the second turned-up portion 56, and the second main body 54b.

In the first side S1 of the tire 2, a second end 52b of the second element 44 is located at substantially the same position in the axial direction as that of the first end 46a of the first element 42. In the tire 2, in a portion outward of the first end 46a of the first element 42 of the band 14 in the axial direction, the first turned-up portion 50 and the first main body 48a overlap each other in the radial direction. In a portion inward of the first end 46a of the first element 42 of the band 14 in the axial direction, the first main body 48a and the second main body 54b overlap each other in the radial direction.

In the second side S2 of the tire 2, a second end 46b of the first element 42 is located at substantially the same position in the axial direction as that of the first end 52a of the second element 44. In the tire 2, in a portion outward of the first end 52a of the second element 44 of the band 14 in the axial direction, the second turned-up portion 56 and the second main body 54a overlap each other in the radial direction. In a portion inward of the first end 52a of the second element 44 of the band 14 in the axial direction, the second main body 54a and the first main body 48b overlap each other in the radial direction.

In the tire 2, a portion of the band 14 between the first end 46a of the first element 42 and the first end 52a of the second element 44 is referred to as a center portion C. A portion of the band 14 which is outward of the first end 46a of the first element 42 in the axial direction is referred to as a first edge portion E1. A portion of the band 14 which is outward of the first end 52a of the second element 44 in the axial direction is referred to as a second edge portion E2. The band 14 has the center portion C, the first edge portion E1, and the second edge portion E2.

As shown, the center portion C is composed of two layers. The center portion C is composed of the first main body 48a and the first main body 48b of the first element 42 and the second main body 54a and the second main body 54b of the second element 44. In the center portion C, the second main body 54b of the second element 44 is laminated on the first main body 48a of the first element 42 so as to be located outward of the first main body 48a in the radial direction, and the first main body 48b of the first element 42 is laminated on the second main body 54a of the second element 44 so as to be located outward of the second main body 54a in the radial direction. In the tire 2, the first element 42 and the second element 44 intersect each other at the equator plane. In the tire 2, in particular, when cords that are different from the second cords included in the second element 44 are used for the first cords included in the first element 42, this intersection can effectively contribute to uniformization of the stiffness, in the axial direction, of the center portion C. In the tire 2, non-uniform swelling is effectively prevented. The conicity is appropriately maintained, and thus vehicle drifting can be effectively prevented with the tire 2.

As shown, each of the first edge portion E1 and the second edge portion E2 is composed of two layers. The first edge portion E1 is composed of the first main body 48a and the first turned-up portion 50. In other words, the first edge portion E1 is composed of the first element 42. The second edge portion E2 is composed of the second main body 54a and the second turned-up portion 56. In other words, the second edge portion E2 is composed of the second element 44.

As described above, the first element 42 includes the first cords, and the second element 44 includes the second cords. Therefore, when cords that are different from the second cords included in the second element 44 are used for the first cords included in the first element 42, the band 14 can have the first edge portion E1 and the second edge portion E2 having characteristics different from each other. In this respect, cords having initial moduli different from each other are preferably used for the first cords and the second cords. When the tire 2 is mounted on a vehicle, the first side S1 in which the first end 36a of the belt 12 is located is located at the inner side in the width direction of the vehicle, and the second side S2 in which the second end 36b of the belt 12 is located is located at the outer side in the width direction of the vehicle. Therefore, when the tire 2 is mounted on the vehicle, the first edge portion E1 is located at the inner side in the width direction of the vehicle, and the second edge portion E2 is located at the outer side in the width direction of the vehicle. From the standpoint that a tire 2 having excellent durability is obtained, the first edge portion E1 preferably has stiffness higher than the stiffness of the second edge portion E2. In this respect, the first cords preferably have an initial modulus higher than the initial modulus of the second cords. In light of improvement of durability, the ratio of the initial modulus of each first cord to the initial modulus of each second cord is preferably equal to or greater than 1.1. In light of uniformization of stiffness, the ratio is preferably equal to or less than 5.

In the present specification, each of the initial moduli of the first cords and the second cords means the gradient, at the origin, of a "load-elongation" curve of the cord which is obtained according to the test methods for chemical fiber tire cords of JIS L 1017.

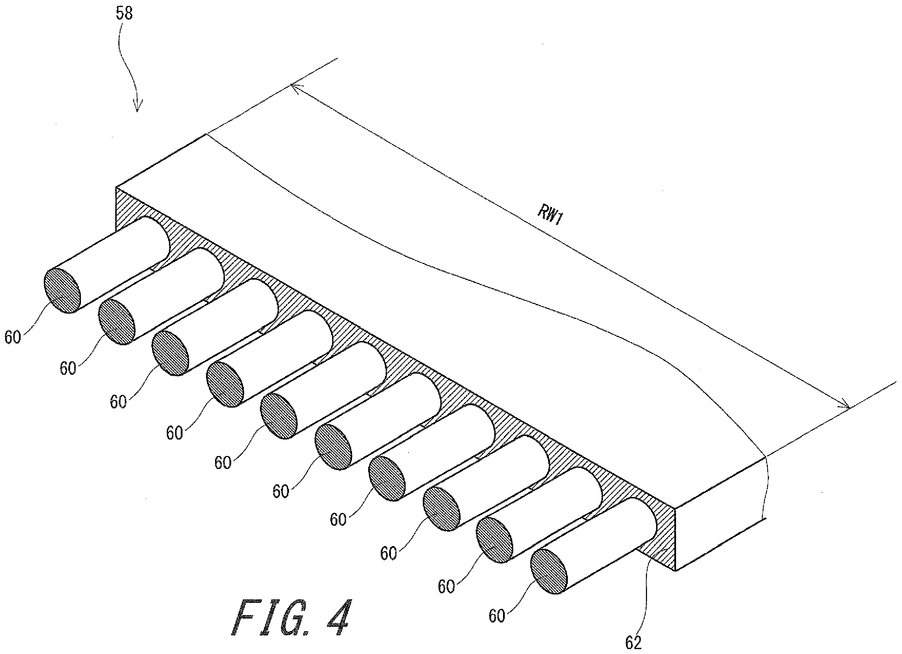

In the tire 2, the first element 42 is formed by using a first ribbon 58. The first ribbon 58 is shown in FIG. 4. The first ribbon 58 includes a plurality of first cords 60 and a topping rubber 62. As shown, the first ribbon 58 includes ten first cords 60. Each first cord 60 extends in the longitudinal direction of the first ribbon 58. Although described later, the first element 42 is formed by helically winding the first ribbon 58 while causing the first ribbon 58 to extend in substantially the circumferential direction. Therefore, in the first element 42, the first cords 60 extend in substantially the circumferential direction and are helically wound.

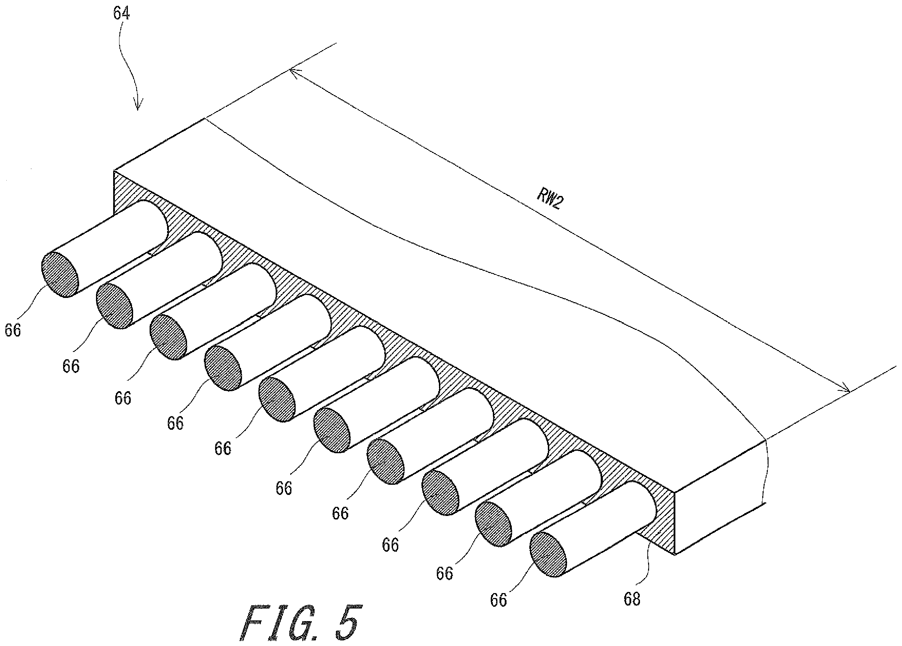

In the tire 2, the second element 44 is formed by using a second ribbon 64. The second ribbon 64 is shown in FIG. 5. The second ribbon 64 includes a plurality of second cords 66 and a topping rubber 68. As shown, the second ribbon 64 includes ten second cords 66. Each second cord 66 extends in the longitudinal direction of the second ribbon 64. Although described later, the second element 44 is formed by helically winding the second ribbon 64 while causing the second ribbon 64 to extend in substantially the circumferential direction. Therefore, in the second element 44, the second cords 66 extend in substantially the circumferential direction and are helically wound.

In the tire 2, the absolute value of the angle of each of the first cords 60 and the second cords 66 relative to the equator plane is equal to or less than 5° and particularly equal to or less than 2°. In the present invention, a direction in which the absolute value of an angle relative to the equator plane is equal to or less than 5.0° is regarded as "substantially the circumferential direction".

In the tire 2, the band 14 has a so-called jointless structure. The band 14 can contribute to the stiffness, in the radial direction, of the tire 2. In the tire 2, the influence of the centrifugal force exerted during running is suppressed.

In the tire 2, each of the first cords 60 and the second cords 66 is formed from an organic fiber. Examples of preferable organic fibers include nylon fibers, polyester fibers, rayon fibers, polyethylene naphthalate fibers, and aramid fibers. Cords each formed from a single organic fiber may be used for the first cords 60 and the second cords 66, or cords each formed by combining a plurality of organic fibers may be used for the first cords 60 and the second cords 66.

The initial modulus of a cord formed from an aramid fiber changes depending on its number of twist or the like and is generally about 76 cN/dtex. The initial modulus of a cord formed from a polyethylene naphthalate fiber changes depending on its number of twist or the like and is generally about 49 cN/dtex. The initial modulus of a cord formed from a nylon fiber changes depending on its number of twist or the like and is generally about 17 cN/dtex. As described above, cords each formed from a single organic fiber may be used for the first cords 60 and the second cords 66, or cords each formed by combining a plurality of organic fibers may be used for the first cords 60 and the second cords 66. Therefore, the initial modulus of each of the cords used for the first cords 60 and the second cords 66 is preferably in a range of equal to or greater than 17 cN/dtex and equal to or less than 76 cN/dtex.

As described above, in the manufacturing method, when cords having initial moduli different from each other are used for the first cords 60 and the second cords 66, the band 14 which includes the first edge portion E1 and the second edge portion E2 having characteristics different from each other is obtained.

As described above, the initial modulus of a cord formed from an aramid fiber is generally about 76 cN/dtex. The initial modulus of a cord formed from a polyethylene naphthalate fiber is generally about 49 cN/dtex. The initial modulus of a cord formed from a nylon fiber is generally about 17 cN/dtex. In other words, the cord formed from the aramid fiber has an initial modulus different from the initial modulus of the cord formed from the polyethylene naphthalate fiber. The cord formed from the aramid fiber has an initial modulus different from the initial modulus of the cord formed from the nylon fiber. The cord formed from the polyethylene naphthalate fiber has an initial modulus different from the initial modulus of the cord formed from the nylon fiber. Therefore, as a combination of the first cords 60 and the second cords 66, preferably, cords each formed from an aramid fiber are used for the first cords 60, and cords each formed from a nylon fiber are used for the second cords 66. Preferably, cords each formed from a nylon fiber are used for the first cords 60, and cords each formed from an aramid fiber are used for the second cords 66. Preferably, cords each formed from an aramid fiber are used for the first cords 60, and cords each formed from a polyethylene naphthalate fiber are used for the second cords 66. Preferably, cords each formed from a polyethylene naphthalate fiber are used for the first cords 60, and cords each formed from an aramid fiber are used for the second cords 66. Preferably, cords each formed from a polyethylene naphthalate fiber are used for the first cords 60, and cords each formed from a nylon fiber are used for the second cords 66. Preferably, cords each formed from a nylon fiber are used for the first cords 60, and cords each formed from polyethylene naphthalate are used for the second cords 66.

As described above, in the manufacturing method, when cords each having an initial modulus higher than the initial modulus of each second cord 66 are used for the first cords 60, a tire 2 having excellent durability is obtained.

As described above, the initial modulus of a cord formed from an aramid fiber is generally about 76 cN/dtex. The initial modulus of a cord formed from a polyethylene naphthalate fiber is generally about 49 cN/dtex. The initial modulus of a cord formed from a nylon fiber is generally about 17 cN/dtex. In other words, the initial modulus of the cord formed from the aramid fiber is higher than the initial modulus of the cord formed from the polyethylene naphthalate fiber. The initial modulus of the cord formed from the aramid fiber is higher than the initial modulus of the cord formed from the nylon fiber. The initial modulus of the cord formed from the polyethylene naphthalate fiber is higher than the initial modulus of the cord formed from the nylon fiber. Therefore, as a combination of the first cords 60 and the second cords 66, preferably, cords each formed from an aramid fiber are used for the first cords 60, and cords each formed from a nylon fiber are used for the second cords 66. Preferably, cords each formed from an aramid fiber are used for the first cords 60, and cords each formed from a polyethylene naphthalate fiber are used for the second cords 66. Preferably, cords each formed from a polyethylene naphthalate fiber are used for the first cords 60, and cords each formed from a nylon fiber are used for the second cords 66. As a particularly preferable combination, cords each formed from an aramid fiber are used for the first cords 60, and cords each formed from a nylon fiber are used for the second cords 66.

In the tire 2, the configuration of each first cord 60 is not particularly limited. When cords each formed from an aramid fiber are used for the first cords 60, 1100 dtex/2, 940 dtex/2, and 1100 dtex/940 dtex are preferred as the configuration of each first cord 60. In light of improvement of the durability of the tire 2, 1100 dtex/940 dtex is particularly preferred as the configuration of each first cord 60. When cords each formed from a polyethylene naphthalate fiber are used for the first cords 60, 1500 dtex/2 is preferred as the configuration of each first cord 60. In the present specification, the configuration of each first cord 60 is represented according to Section 5.2 "Indication method for cord structures" in JIS L 1017. The same applies to the later-described configuration of each second cord 66.

In the tire 2, the configuration of each second cord 66 is not particularly limited. When cords each formed from a nylon fiber are used for the second cords 66, 1400 dtex/2 is preferred as the configuration of each second cord 66. When cords each formed from a polyethylene naphthalate fiber are used for the second cords 66, 1500 dtex/2 is preferred as the configuration of each second cord 66.

The tire 2 is manufactured as follows. The plurality of first cords 60 are extruded together with the topping rubber 62 to obtain the first ribbon 58. The plurality of second cords 66 are extruded together with the topping rubber 68 to obtain the second ribbon 64. The first ribbon 58 and the second ribbon 64 are supplied to a former (not shown).

In FIG. 4, a double-headed arrow RW1 represents the width of the first ribbon 58. In the manufacturing method, in light of being excellent in processability and being able to contribute to production of a high-quality tire 2, the width RW1 of the first ribbon 58 is preferably equal to or greater than 9.8 mm and preferably equal to or less than 11.0 mm.

In FIG. 5, a double-headed arrow RW2 represents the width of the second ribbon 64. In the manufacturing method, in light of being excellent in processability and being able to contribute to production of a high-quality tire 2, the width RW2 of the second ribbon 64 is preferably equal to or greater than 9.8 mm and preferably equal to or less than 11.0 mm.

The former includes a cylindrical drum, a first head, and a second head. In the former, the carcass ply 32 is wound around the drum into a cylindrical shape. A first sheet is wound around the cylindrical-shaped carcass ply 32 to form the inner layer 34a which forms a portion of the belt 12. A second sheet is wound around the inner layer 34a to form the outer layer 34b which forms another portion of the belt 12. By so doing, the belt 12 is obtained.

In the former, the first head feeds the first ribbon 58. The first head is movable in the axial direction. The first head is movable in the axial direction while feeding the first ribbon 58. In the former, the second head feeds the second ribbon 64. The second head is movable in the axial direction. The second head is movable in the axial direction while feeding the second ribbon 64.

In the manufacturing method, the first ribbon 58 fed from the first head is laminated on the belt 12. The second ribbon 64 fed from the second head is laminated on the belt 12.

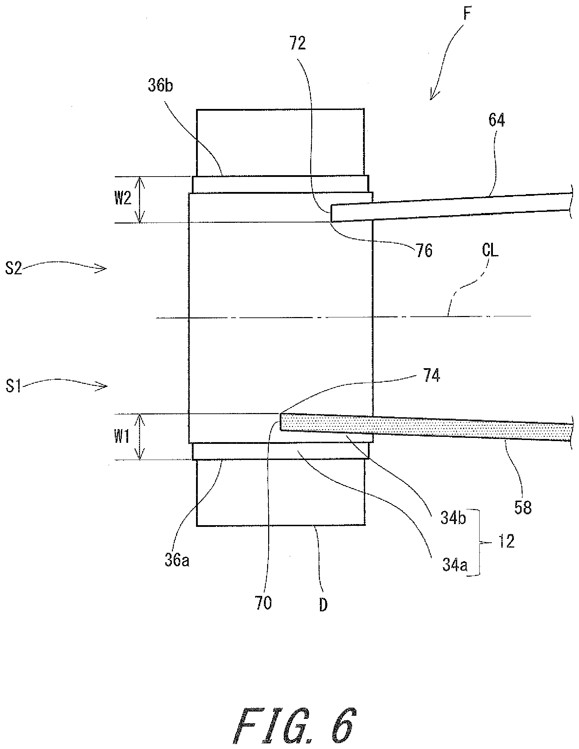

FIG. 6 shows a state of laminating the first ribbon 58 and the second ribbon 64. In FIG. 6, the up-down direction corresponds to the axial direction of the tire 2. The right-left direction corresponds to the circumferential direction of the tire 2. The lower side in the surface of the sheet corresponds to the first side S1 side of the tire 2. The upper side in the surface of the sheet corresponds to the second side S2 side of the tire 2. In FIG. 6, a reference sign F indicates the former. A reference sign D indicates the drum provided in the former F.

In the manufacturing method, a leading end 70 of the first ribbon 58 is laminated on the belt 12 at an inner side, in the axial direction, of the first end 36a of the belt 12. An end 72 of the second ribbon 64 is laminated on the belt 12 at an inner side, in the axial direction, of the second end 36b of the belt 12.

In FIG. 6, a double-headed arrow W1 represents the distance in the axial direction from the leading end 70 of the first ribbon 58 to the first end 36a of the belt 12. In the present specification, the distance W1 is indicated as the distance in the axial direction from an inner edge 74 in the axial direction at the leading end 70 of the first ribbon 58 to the first end 36a of the belt 12.

In the manufacturing method, the distance W1 influences the width, in the axial direction, of the first edge portion E1 which forms a portion of the band 14. From the standpoint that the first edge portion E1 can sufficiently hold a portion at the first end 36a of the belt 12, the distance W1 is preferably equal to or greater than 30 mm. From the standpoint that stiffness balance of the band 14 can be appropriately maintained, the distance W1 is preferably equal to or less than 50 mm.

In FIG. 6, a double-headed arrow W2 represents the distance in the axial direction from the end 72 of the second ribbon 64 to the second end 36b of the belt 12. In the present specification, the distance W2 is indicated as the distance in the axial direction from an inner edge 76 in the axial direction at the end 72 of the second ribbon 64 to the second end 36b of the belt 12.

In the manufacturing method, the distance W2 influences the width, in the axial direction, of the second edge portion E2 which forms another portion of the band 14. From the standpoint that the second edge portion E2 can sufficiently hold a portion at the second end 36b of the belt 12, the distance W2 is preferably equal to or greater than 30 mm. From the standpoint that stiffness balance of the band 14 can be appropriately maintained, the distance W2 is preferably equal to or less than 50 mm.

As shown in FIG. 6, in the manufacturing method, the leading end 70 of the first ribbon 58 and the end 72 of the second ribbon 64 are located at positions different from each other in the circumferential direction of the drum D.

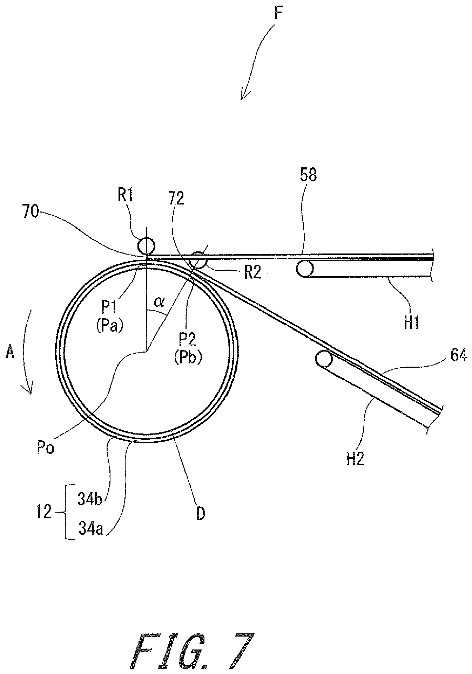

FIG. 7 shows a front view of FIG. 6. In FIG. 7, the direction perpendicular to the surface of the sheet corresponds to the axial direction of the tire 2. The front side on the surface of the sheet corresponds to the first side S1 side of the tire 2. In FIG. 7, a reference sign Po indicates a rotation axis of the drum D. In the former F, the drum D rotates about the rotation axis Po in the direction indicated by an arrow A. The rotation direction A is a forward rotation direction of the drum D. In light of productivity improvement, the rotation speed of the drum D is preferably equal to or greater than 180 m/min and more preferably equal to or greater than 200 m/min. From the standpoint that a high-quality tire 2 can be stably produced, the rotation speed is preferably equal to or less than 250 m/min and more preferably equal to or less than 240 m/min. It should be noted that the rotation speed corresponds to a speed at which the first ribbon 58 and the second ribbon 64 are attached.

In FIG. 7, a reference sign R1 indicates a first pressing roller. The first pressing roller R1 presses the first ribbon 58 laminated on the belt 12, against the belt 12. By so doing, the first ribbon 58 is attached to the belt 12. A reference sign R2 indicates a second pressing roller. The second pressing roller R2 presses the second ribbon 64 laminated on the belt 12, against the belt 12. By so doing, the second ribbon 64 is attached to the belt 12. It should be noted that in the drawing, a reference sign H1 indicates the first head, and a reference sign H2 indicates the second head.

In FIG. 7, a reference sign P1 represents a position, on a circumferential surface of the drum D, corresponding to the position of the leading end 70 of the first ribbon 58. In the manufacturing method, due to rotation of the drum D, the first ribbon 58 fed from the first head H1 is wound on the belt 12 and attached thereto. Therefore, the position of the leading end 70 of the first ribbon 58 shown in FIG. 7 is also a position at which the attachment of the first ribbon 58 is started. In FIG. 7, a position, on the circumferential surface of the drum D, corresponding to the start position is indicated by a reference sign Pa.

In FIG. 7, a reference sign P2 represents a position, on the circumferential surface of the drum D, corresponding to the position of the end 72 of the second ribbon 64. In the manufacturing method, due to the rotation of the drum D, the first ribbon 58 fed from the second head H2 is wound on the belt 12 and attached thereto. Therefore, the position of the end 72 of the second ribbon 64 shown in FIG. 7 is also a position at which the attachment of the second ribbon 64 is started. In FIG. 7, a position, on the circumferential surface of the drum D, corresponding to the start position is indicated by a reference sign Pb.

As shown, the start position Pa of the attachment of the first ribbon 58 is located forward of the start position Pb of the attachment of the second ribbon 64 in the rotation direction of the drum D. In the manufacturing method, the attachment of the first ribbon 58 and the attachment of the second ribbon 64 to the belt 12 are started at positions different from each other in the circumferential direction. It should be noted that the start position Pa of the attachment of the first ribbon 58 may be located rearward of the start position Pb of the attachment of the second ribbon 64 in the rotation direction of the drum D, and the attachment of the first ribbon 58 and the attachment of the second ribbon 64 to the belt 12 may be started. The attachment of the first ribbon 58 and the attachment of the second ribbon 64 to the belt 12 may be started at the same position in the circumferential direction.

In FIG. 7, an angle α represents a center angle between a line segment connecting a center Po of the drum D to the start position Pa and a line segment connecting the center Po to the start position Pb. The center angle α represents a relative position of the start position Pb relative to the start position Pa. From the standpoint that a high-quality tire 2 can be stably produced, the center angle α is preferably equal to or greater than 17° and more preferably equal to or greater than 22°. The center angle α is preferably equal to or less than 30° and more preferably equal to or less than 27°.

In the manufacturing method, each time the drum D makes one rotation, the position P1 and the position P2 pass directly below the pressing roller R1 in order. Each time the drum D makes one rotation, the position P2 and the position P1 pass directly below the pressing roller R2 in order.

In the manufacturing method, the first ribbon 58 whose leading end 70 is laminated on the belt 12 is helically wound while the first head H1 is moved in the axial direction toward the first end 36a of the belt 12. The second ribbon 64 whose end 72 is laminated on the belt 12 is helically wound while the second head H2 is moved in the axial direction toward the second end 36b of the belt 12.

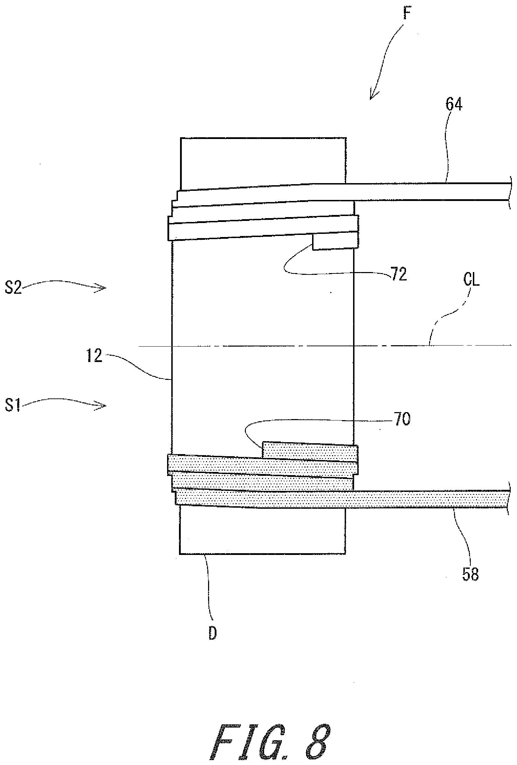

FIG. 8 shows a state where the first ribbon 58 has reached the portion of the first end 36a of the belt 12 and the second ribbon 64 has reached the portion of the second end 36b of the belt 12. Although not shown, in the manufacturing method, when the first ribbon 58 reaches the portion of the first end 36a of the belt 12, the position P1 of the leading end 70 coincides with the start position Pa. When the second ribbon 64 reaches the portion of the second end 36b of the belt 12, the position P2 of the end 72 coincides with the start position Pb.

In the manufacturing method, when the first ribbon 58 covers a portion at the first end 36a of the belt 12, the movement of the first head H1 is stopped. The rotation of the drum D is not stopped, and thus the first ribbon 58 is wound in the circumferential direction at the first end 36a of the belt 12. In the manufacturing method, the winding of the first ribbon 58 in the circumferential direction is started at the position Pa.

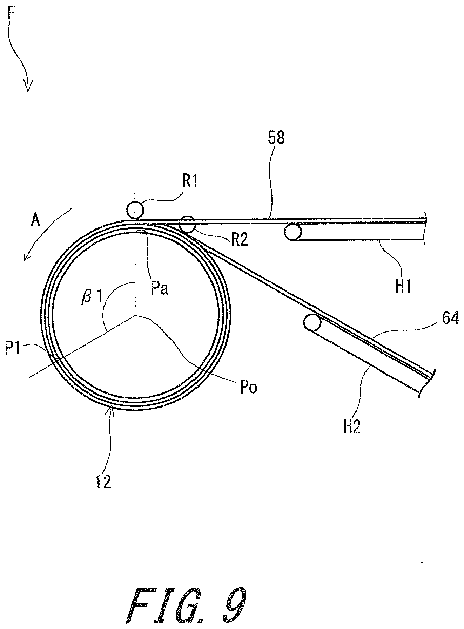

FIG. 9 shows a state where the first ribbon 58 is being wound in the circumferential direction. In FIG. 9, the drum D further rotates from the state in FIG. 8 in the direction indicated by an arrow A. In the drawing, an angle β1 represents a rotation angle of the drum D in the winding of the first ribbon 58 in the circumferential direction which winding is started at the position Pa. The rotation angle β1 is indicated as a center angle between the line segment connecting the center Po of the drum D to the position Pa and a line segment connecting the center Po to the position P1.

In the manufacturing method, the winding of the first ribbon 58 in the circumferential direction can suppress lifting at the first end 36a of the belt 12. From the standpoint that a tire 2 having excellent durability can be obtained, the rotation angle β1 is preferably equal to or greater than 180°. From the standpoint that the stiffness at the first end 36a of the belt 12 can be appropriately maintained, the rotation angle β1 is preferably equal to or less than 360°.

In the manufacturing method, when the second ribbon 64 covers a portion at the second end 36b of the belt 12, the movement of the second head H2 is stopped. The rotation of the drum D is not stopped, and thus the second ribbon 64 is wound in the circumferential direction at the second end 36b of the belt 12. In the manufacturing method, the winding of the second ribbon 64 in the circumferential direction is started at the position Pb.

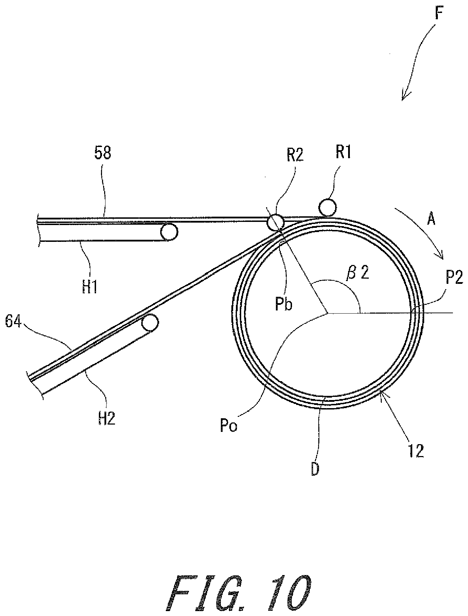

FIG. 10 shows a state where the second ribbon 64 is being wound in the circumferential direction. FIG. 10 is a back view of FIG. 9. In FIG. 10, the drum D further rotates from the state in FIG. 8 in the direction indicated by an arrow A. In the drawing, an angle β2 represents a rotation angle of the drum D in the winding of the second ribbon 64 in the circumferential direction which winding is started at the position Pb. The rotation angle β2 is indicated as a center angle between the line segment connecting the center Po of the drum D to the position Pb and a line segment connecting the center Po to the position P2. It should be noted that in the manufacturing method, the rotation angle β2 is equal to the aforementioned rotation angle β1.

In the manufacturing method, the winding of the second ribbon 64 in the circumferential direction can suppress lifting at the second end 36b of the belt 12. From the standpoint that a tire 2 having excellent durability can be obtained, the rotation angle β2 is preferably equal to or greater than 180°. From the standpoint that the stiffness at the second end 36b of the belt 12 can be appropriately maintained, the rotation angle β2 is preferably equal to or less than 360°.

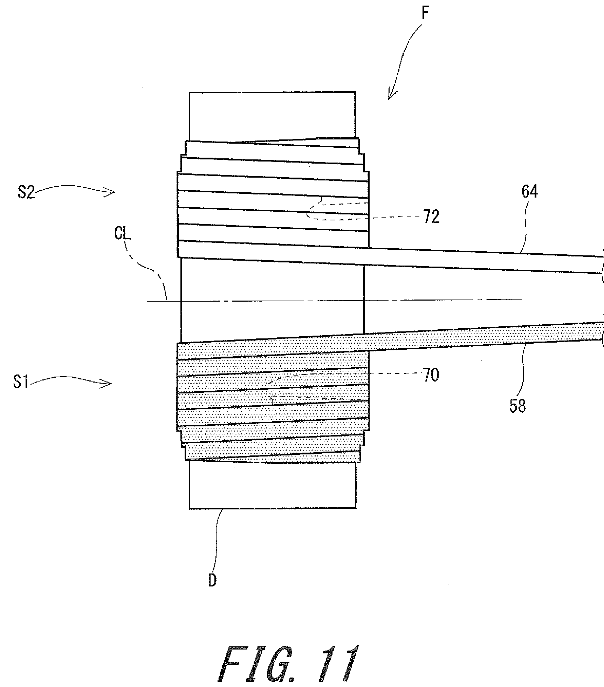

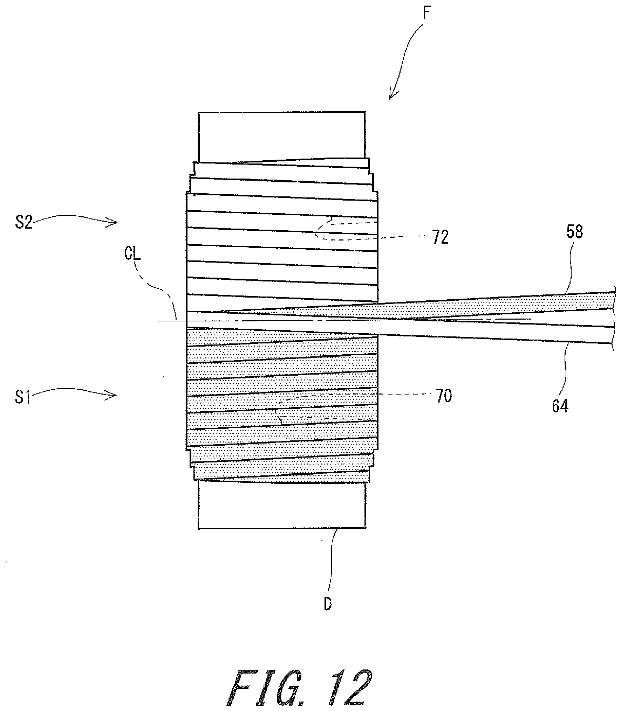

In the manufacturing method, after the winding of the first ribbon 58 in the circumferential direction is completed, the first ribbon 58 is further helically wound while the first head H1 is moved inward in the axial direction. After the winding of the second ribbon 64 in the circumferential direction is completed, the second ribbon 64 is further helically wound while the second head H2 is moved inward in the axial direction. A state of the winding is shown in FIG. 11. Then, as shown in FIG. 12, the first ribbon 58 and the second ribbon 64 are wound so as to intersect each other at a position corresponding to the equator plane of the tire 2.

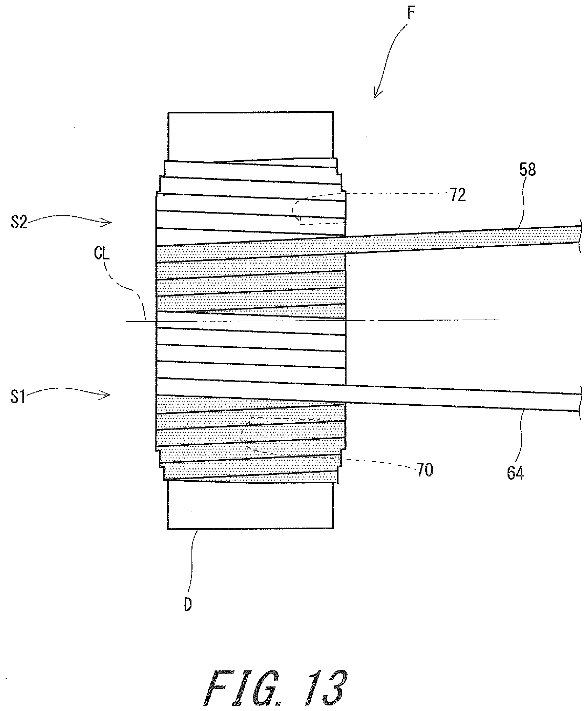

As shown in FIG. 13, in the manufacturing method, the first ribbon 58 is further helically wound while the first head H1 is further moved in the axial direction toward the second end 36b of the belt 12. The second ribbon 64 is further helically wound while the second head H2 is further moved in the axial direction toward the first end 36a of the belt 12.

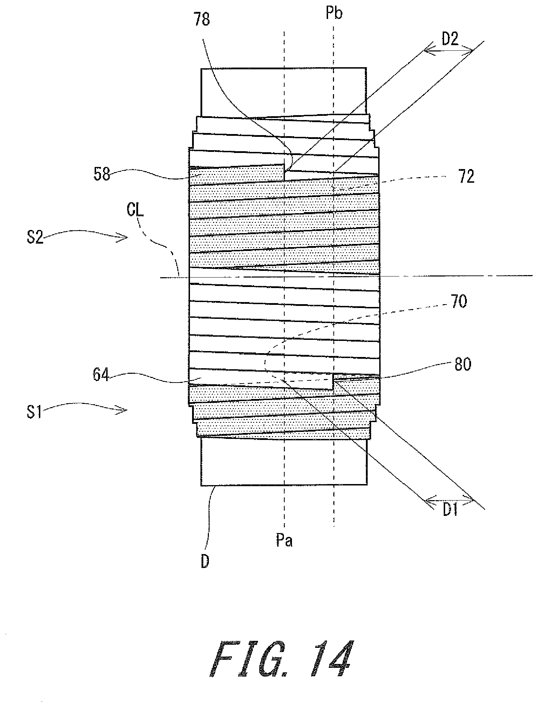

As shown in FIG. 14, in the manufacturing method, the winding of the first ribbon 58 is completed near the end 72 of the second ribbon 64 such that a termination end 78 of the first ribbon 58 and the start position Pa are caused to coincide with each other in the circumferential direction. The winding of the second ribbon 64 is completed near the leading end 70 of the first ribbon 58 such that a termination end 80 of the second ribbon 64 and the start position Pb are caused to coincide with each other in the circumferential direction. Thus, the band 14 in which the first element 42 and the second element 44 intersect each other at the equator plane is obtained. Components such as the tread 4 are further combined to obtain a raw cover (also referred to as an uncrosslinked tire).

As shown, in a portion corresponding to the first side S1 side of the tire 2, a portion at the termination end 80 of the second ribbon 64 overlaps a portion at the leading end 70 of the first ribbon 58 in the radial direction. By adjusting the rotation of the drum D and the aforementioned center angle α, the winding of the second ribbon 64 may be completed such that the termination end 80 of the second ribbon 64 is spaced apart from the leading end 70 of the first ribbon 58. In the drawing, a double-headed arrow D1 represents the length along the circumferential direction from the leading end 70 of the first ribbon 58 to the termination end 80 of the second ribbon 64. From the standpoint that influence of excessive overlap on uniformity can be prevented, the length D1 is preferably equal to or less than 150 mm and more preferably equal to or less than 100 mm. From the standpoint that influence of excessive spacing on uniformity can be prevented, the length D1 is preferably equal to or greater than -150 mm and more preferably equal to or greater than - 100 mm.

As shown, in a portion corresponding to the second side S2 side of the tire 2, the termination end 78 of the first ribbon 58 is spaced apart from the end 72 of the second ribbon 64. By adjusting the rotation of the drum D and the aforementioned center angle α, the winding of the first ribbon 58 may be completed such that a portion at the termination end 78 of the first ribbon 58 overlaps a portion at the end 72 of the second ribbon 64 in the radial direction. In the drawing, a double-headed arrow D2 represents the length along the circumferential direction from the end 72 of the second ribbon 64 to the termination end 78 of the first ribbon 58. From the standpoint that influence of excessive spacing on uniformity can be prevented, the length D2 is preferably equal to or greater than -150 mm and more preferably equal to or greater than - 100 mm. From the standpoint that influence of excessive overlap on uniformity can be prevented, the length D2 is preferably equal to or less than 150 mm and more preferably equal to or less than 100 mm.

In the manufacturing method, the raw cover is put into a mold (not shown). Thus, the outer surface of the raw cover abuts against the cavity surface of the mold. The inner surface of the raw cover abuts against a bladder or a core. The raw cover is pressurized and heated in the mold. The rubber composition in the raw cover flows due to the pressurization and the heating. Cross-linking reaction is caused in the rubber due to the heating, to obtain the tire 2.

As described above, in the manufacturing method, the first ribbon 58 and the second ribbon 64 are wound so as to intersect each other at the position corresponding to the equator plane of the tire 2. Thus, cross sections of the first ribbon 58 and cross sections of the second ribbon 64 are arranged in the axial direction without any gap. In the manufacturing method, a gap in which the first ribbon 58 and the second ribbon 64 are not present is not formed in a portion of the band 14 at the equator plane as in an existing tire 2. Formation of unevenness caused by formation of the gap is prevented, and thus the tire 2 obtained by the manufacturing method is excellent in uniformity.

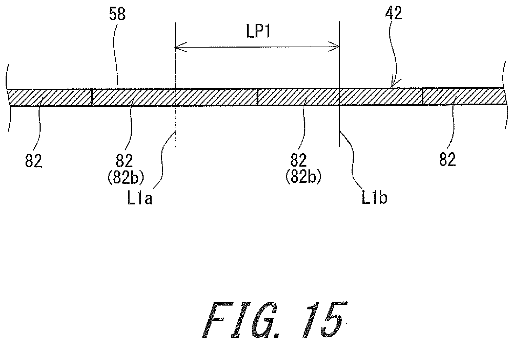

FIG. 15 shows a cross section of the first element 42 which forms a portion of the band 14 which is being formed. As described above, in the manufacturing method, the first element 42 is formed by helically winding the first ribbon 58. Thus, in the cross section of the first element 42, cross sections 82 of the first ribbon 58 are arranged without any gap. In FIG. 15, a solid line L1a represents a center line, in the width direction, of one cross section 82a. A solid line L1b represents a center line, in the width direction, of another cross section 82b located adjacent to the cross section 82a. A double-headed arrow LP1 represents the distance between the center line L1a and the center line L1b. The distance LP1 is a pitch in the winding of the first ribbon 58. The pitch LP1 is also referred to as a fed amount of the first ribbon 58.

In the manufacturing method, in light of processability, the pitch LP1 is preferably equal to or greater than 9.8 mm. From the standpoint that a first element 42 having appropriate stiffness is obtained, the pitch LP1 is preferably equal to or less than 11.0 mm.

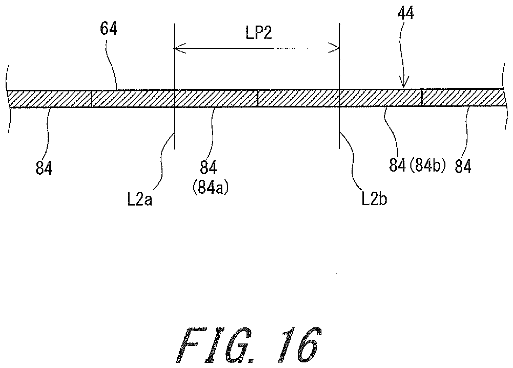

FIG. 16 shows a cross section of the second element 44 which forms another portion of the band 14 which is being formed. As described above, in the manufacturing method, the second element 44 is formed by helically winding the second ribbon 64. Thus, in the cross section of the second element 44, cross sections 84 of the second ribbon 64 are arranged without any gap. In FIG. 16, a solid line L2a represents a center line, in the width direction, of one cross section 84a. A solid line L2b represents a center line, in the width direction, of another cross section 84b located adjacent to the cross section 84a. A double-headed arrow LP2 represents the distance between the center line L2a and the center line L2b. The distance LP2 is a pitch in the winding of the second ribbon 64. The pitch LP2 is also referred to as a fed amount of the second ribbon 64.

In the manufacturing method, in light of processability, the pitch LP2 is preferably equal to or greater than 9.8 mm. From the standpoint that a second element 44 having appropriate stiffness is obtained, the pitch LP2 is preferably equal to or less than 11.0 mm.

In the present invention, the dimensions and angles of each component of the tire 2 and a later-described tire are measured in a state where the tire 2 is mounted on a normal rim and inflated to a normal internal pressure. During the measurement, no load is applied to the tire 2. In the present specification, the normal rim means a rim specified in a standard on which the tire 2 is based. The "standard rim" in the JATMA standard, the "Design Rim" in the TRA standard, and the "Measuring Rim" in the ETRTO standard are normal rims. In the present specification, the normal internal pressure means an internal pressure specified in the standard on which the tire 2 is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures. It should be noted that in the case of a tire 2 for passenger car, the dimensions and angles are measured in a state where the internal pressure is 180 kPa.

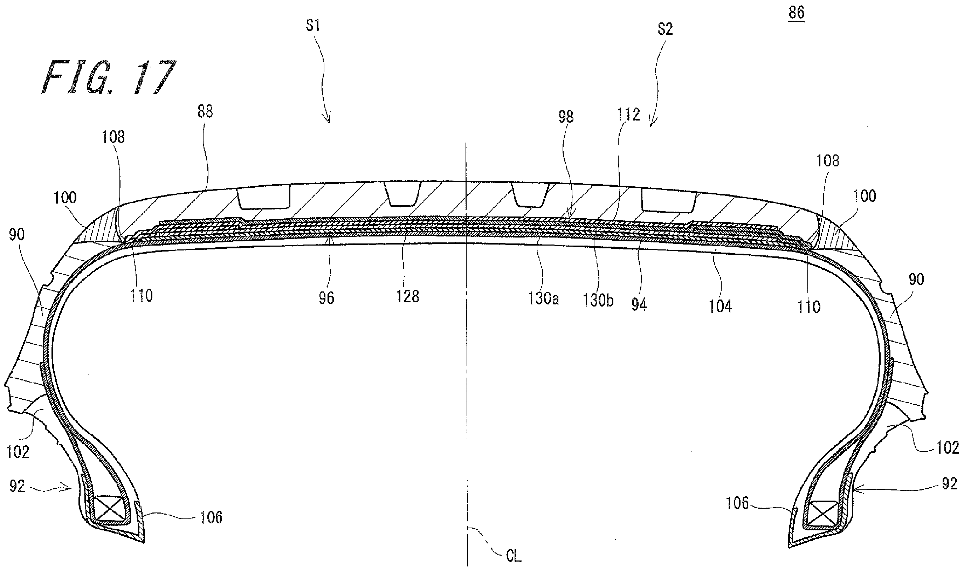

FIG. 17 shows a cross section of a pneumatic tire 86 obtained by a manufacturing method according to another embodiment of the present invention. The tire 86 has a shape which is substantially bilaterally symmetrical about an alternate long and short dash line CL in FIG. 17. The alternate long and short dash line CL represents the equator plane of the tire 86. In FIG. 17, the up-down direction is a radial direction, the right-left direction is an axial direction, and the direction perpendicular to the surface of the sheet is a circumferential direction. The tire 86 includes a tread 88, sidewalls 90, beads 92, a carcass 94, a belt 96, a band 98, wings 100, clinches 102, an inner liner 104, and chafers 106. The tire 86 has the same configuration as that of the tire 2 shown in FIG. 1 except for the band 98.

The band 98 is located between the tread 88 and the belt 96. The band 98 covers the belt 96. As shown, ends 108 of the band 98 are located outward of ends 110 of the belt 96 in the axial direction.

In the tire 86, the band 98 is composed of a first element 112 and a second element 114. Although not shown, the first element 112 includes first cords and a topping rubber. The second element 114 includes second cords and a topping rubber.

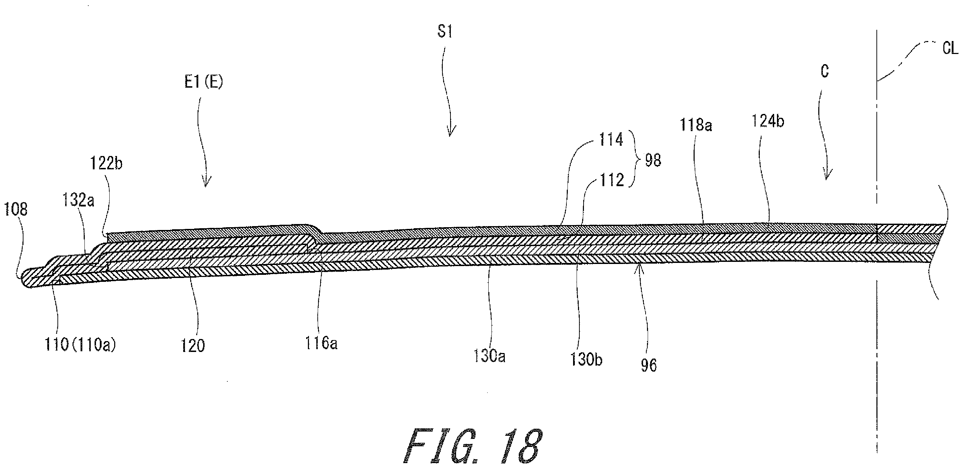

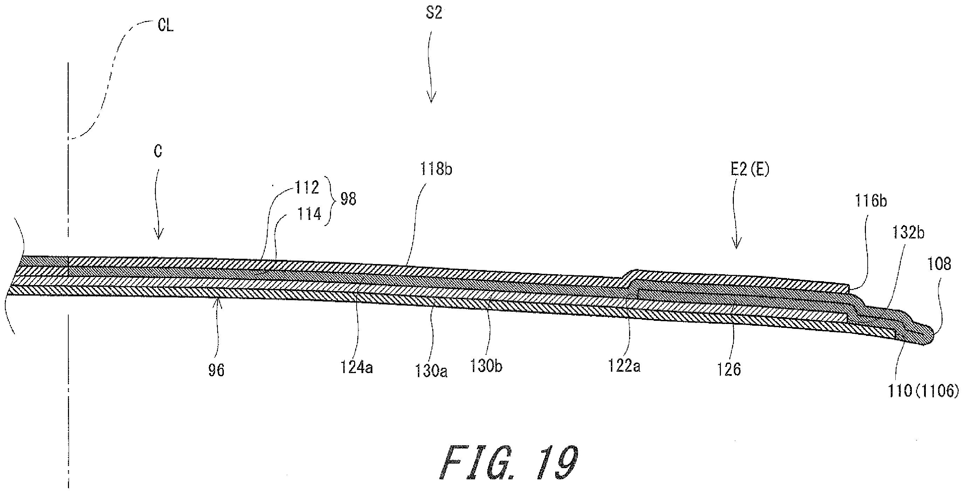

FIG. 18 shows the band 98 in a first side S1 of the tire 86 together with the belt 96. FIG. 19 shows the band 98 in a second side S2 of the tire 86 together with the belt 96.

In the first side S1 of the tire 86, the first element 112 is laminated on the belt 96 so as to be located outward of the belt 96 in the radial direction. A first end 116a of the first element 112 is located inward of a first end 110a of the belt 96 in the axial direction. The first element 112 is turned up from the inner side to the outer side in the radial direction near the first end 110a of the belt 96. Due to this turning-up, in the first element 112, a first main body 118a is formed so as to extend in the axial direction from the equator plane toward the first end 110a of the belt 96, and a first turned-up portion 120 is formed so as to extend inward in the axial direction from the first main body 118a. In the tire 86, the first element 112 includes the first main body 118a and the first turned-up portion 120.

In the second side S2, the first element 112 is laminated on the second element 114 so as to be located outward of the second element 114 in the radial direction. In addition to the first turned-up portion 120 and the first main body 118a which are described above, the first element 112 further includes a first main body 118b extending in the axial direction from the equator plane toward a second end 110b of the belt 96. The first element 112 of the tire 86 is composed of the first main body 118a, the first turned-up portion 120, and the first main body 118b.

In the second side S2 of the tire 86, the second element 114 is laminated on the belt 96 so as to be located outward of the belt 96 in the radial direction. A first end 122a of the second element 114 is located inward of the second end 110b of the belt 96 in the axial direction. The second element 114 is turned up from the inner side to the outer side in the radial direction near the second end 110b of the belt 96. Due to this turning-up, in the second element 114, a second main body 124a is formed so as to extend in the axial direction from the equator plane toward the second end 110b of the belt 96, and a second turned-up portion 126 is formed so as to extend inward in the axial direction from the second main body 124a. In the tire 86, the second element 114 includes the second main body 124a and the second turned-up portion 126.

In the first side S1, the second element 114 is laminated on the first element 112 so as to be located outward of the first element 112 in the radial direction. In addition to the second main body 124a and the second turned-up portion 126 which are described above, the second element 114 further includes a second main body 124b extending in the axial direction from the equator plane toward the first end 110a of the belt 96. The second element 114 of the tire 86 is composed of the second main body 124a, the second turned-up portion 126, and the second main body 124b.

In the first side S1 of the tire 86, a second end 122b of the second element 114 is located outward of the first end 116a of the first element 112 in the axial direction. The second end 122b of the second element 114 is located near the first end 110a of the belt 96. In the tire 86, in a portion outward of the first end 116a of the first element 112 of the band 98 in the axial direction, the first turned-up portion 120, the first main body 118a, and the second main body 124b overlap each other in the radial direction. In a portion inward of the first end 116a of the first element 112 of the band 98 in the axial direction, the first main body 118a and the second main body 124b overlap each other in the radial direction.

In the second side S2 of the tire 86, a second end 116b of the first element 112 is located outward of the first end 122a of the second element 114 in the axial direction. The second end 116b of the first element 112 is located near the second end 110b of the belt 96. In the tire 86, in a portion outward of the first end 122a of the second element 114 of the band 98 in the axial direction, the second turned-up portion 126, the second main body 124a, and the first main body 118b overlap each other in the radial direction. In a portion inward of the first end 122a of the second element 114 of the band 98 in the axial direction, the second main body 124a and the first main body 118b overlap each other in the radial direction.

In the tire 86, a portion of the band 98 between the first end 116a of the first element 112 and the first end 122a of the second element 114 is referred to as a center portion C. The center portion C has a two-layer structure. A portion of the band 98 which is outward of the first end 116a of the first element 112 in the axial direction is referred to as a first edge portion E1. The first edge portion E1 has a three-layer structure. A portion of the band 98 which is outward of the first end 122a of the second element 114 in the axial direction is referred to as a second edge portion E2. The second edge portion E2 has a three-layer structure. The band 98 is composed of the center portion C having a two-layer structure and a pair of the edge portions E each having a three-layer structure. The band 98 is composed of two or more layers.

In the tire 86, the center portion C is composed of the first main body 118a and the first main body 118b of the first element 112 and the second main body 124a and the second main body 124b of the second element 114. In the center portion C, the second main body 124b of the second element 114 is laminated on the first main body 118a of the first element 112 so as to be located outward of the first main body 118a in the radial direction, and the first main body 118b of the first element 112 is laminated on the second main body 124a of the second element 114 so as to be located outward of the second main body 124a in the radial direction. In the tire 86, the first element 112 and the second element 114 intersect each other at the equator plane. In the tire 86, in particular, when cords that are different from the second cords included in the second element 114 are used for the first cords included in the first element 112, this intersection can effectively contribute to uniformization of the stiffness, in the axial direction, of the center portion C. In the tire 86, non-uniform swelling is effectively prevented. The conicity is appropriately maintained, and thus vehicle drifting can be effectively prevented with the tire 86.

In the tire 86, the first edge portion E1 is composed of the first main body 118a and the first turned-up portion 120 of the first element 112 and the second main body 124b of the second element 114. The second edge portion E2 is composed of the second main body 124a and the second turned-up portion 126 of the second element 114 and the second main body 124b of the first element 112.

As described above, the first element 112 includes the first cords, and the second element 114 includes the second cords. Therefore, when cords that are different from the second cords included in the second element 114 are used for the first cords included in the first element 112, the band 98 can have the first edge portion E1 and the second edge portion E2 having characteristics different from each other. In this respect, cords having initial moduli different from each other are preferably used for the first cords and the second cords. When the tire 86 is mounted on a vehicle, the first side S1 in which the first end 110a of the belt 96 is located is located at the inner side in the width direction of the vehicle, and the second side S2 in which the second end 110b of the belt 96 is located is located at the outer side in the width direction of the vehicle. Therefore, when the tire 86 is mounted on the vehicle, the first edge portion E1 is located at the inner side in the width direction of the vehicle, and the second edge portion E2 is located at the outer side in the width direction of the vehicle. From the standpoint that a tire 86 having excellent durability is obtained, the first edge portion E1 preferably has stiffness higher than the stiffness of the second edge portion E2. In this respect, the first cords preferably have an initial modulus higher than the initial modulus of the second cords. In light of improvement of durability, the ratio of the initial modulus of each first cord to the initial modulus of each second cord is preferably equal to or greater than 1.1. In light of uniformization of stiffness, the ratio is preferably equal to or less than 5.

In the tire 86, the first element 112 is formed by using a first ribbon. The first ribbon includes a plurality of first cords and a topping rubber which are not shown. The first ribbon is the same as the first ribbon 58 shown in FIG. 4. Although described later, the first element 112 is formed by helically winding the first ribbon while causing the first ribbon to extend in substantially the circumferential direction. Therefore, in the first element 112, the first cords extend in substantially the circumferential direction and are helically wound.

In the tire 86, the second element 114 is formed by using a second ribbon. The second ribbon includes a plurality of second cords and a topping rubber which are not shown. The second ribbon is the same as the second ribbon 64 shown in FIG. 5. Although described later, the second element 114 is formed by helically winding the second ribbon while causing the second ribbon to extend in substantially the circumferential direction. Therefore, in the second element 114, the second cords extend in substantially the circumferential direction and are helically wound.

In the tire 86, the absolute value of the angle of each of the first cords and the second cords relative to the equator plane is equal to or less than 5° and particularly equal to or less than 2°. In the present invention, a direction in which the absolute value of an angle relative to the equator plane is equal to or less than 5.0° is regarded as "substantially the circumferential direction".

In the tire 86, the band 98 has a so-called jointless structure. The band 98 can contribute to the stiffness, in the radial direction, of the tire 86. In the tire 86, the influence of the centrifugal force exerted during running is suppressed.

In the tire 86, each of the first cords and the second cords is formed from an organic fiber. Examples of preferable organic fibers include nylon fibers, polyester fibers, rayon fibers, polyethylene naphthalate fibers, and aramid fibers.

As described above, in the manufacturing method, when cords having initial moduli different from each other are used for the first cords and the second cords, the band 98 which includes the first edge portion E1 and the second edge portion E2 having characteristics different from each other is obtained. In this respect, as a combination of the first cords and the second cords, preferably, cords each formed from an aramid fiber are used for the first cords, and cords each formed from a nylon fiber are used for the second cords. Preferably, cords each formed from a nylon fiber are used for the first cords, and cords each formed from an aramid fiber are used for the second cords. Preferably, cords each formed from an aramid fiber are used for the first cords, and cords each formed from a polyethylene naphthalate fiber are used for the second cords. Preferably, cords each formed from a polyethylene naphthalate fiber are used for the first cords, and cords each formed from an aramid fiber are used for the second cords. Preferably, cords each formed from a polyethylene naphthalate fiber are used for the first cords, and cords each formed from a nylon fiber are used for the second cords. Preferably, cords each formed from a nylon fiber are used for the first cords, and cords each formed from a polyethylene naphthalate fiber are used for the second cords.

As described above, in the manufacturing method, when cords each having an initial modulus higher than the initial modulus of each second cord are used for the first cords, a tire 86 having excellent durability is obtained. In this respect, as a combination of the first cords and the second cords, preferably, cords each formed from an aramid fiber are used for the first cords, and cords each formed from a nylon fiber are used for the second cords. Preferably, cords each formed from an aramid fiber are used for the first cords, and cords each formed from a polyethylene naphthalate fiber are used for the second cords. Preferably, cords each formed from a polyethylene naphthalate fiber are used for the first cords, and cords each formed from a nylon fiber are used for the second cords. As a particularly preferable combination, cords each formed from an aramid fiber are used for the first cords, and cords each formed from a nylon fiber are used for the second cords.

In the tire 86, the configuration of each first cord is not particularly limited. When cords each formed from an aramid fiber are used for the first cords, 1100 dtex/2, 940 dtex/2, and 1100 dtex/940 dtex are preferred as the configuration of each first cord. In light of improvement of the durability of the tire 86, 1100 dtex/940 dtex is particularly preferred as the configuration of each first cord. When cords each formed from a polyethylene naphthalate fiber are used for the first cords, 1500 dtex/2 is preferred as the configuration of each first cord.

In the tire 86, the configuration of each second cord is not particularly limited. When cords each formed from a nylon fiber are used for the second cords, 1400 dtex/2 is preferred as the configuration of each second cord. When cords each formed from a polyethylene naphthalate fiber are used for the second cords, 1500 dtex/2 is preferred as the configuration of each second cord.

The tire 86 is manufactured in the same manner as the tire 2 shown in FIG. 1. The plurality of first cords are extruded together with the topping rubber to obtain the first ribbon. The plurality of second cords are extruded together with the topping rubber to obtain the second ribbon. The first ribbon and the second ribbon are supplied to a former F (not shown).

In the former F, a carcass ply 128 is wound around a drum D into a cylindrical shape. A first sheet is wound around the cylindrical-shaped carcass ply 128 to form an inner layer 130a which forms a portion of the belt 96. A second sheet is wound around the inner layer 130a to form an outer layer 130b which forms another portion of the belt 96. By so doing, the belt 96 obtained.

In the former F, a first head H1 feeds the first ribbon. The first head H1 is movable in the axial direction. The first head H1 is movable in the axial direction while feeding the first ribbon. A second head H2 feeds the second ribbon. The second head H2 is movable in the axial direction. The second head H2 is movable in the axial direction while feeding the second ribbon.

Although not shown, in the manufacturing method, an end of the first ribbon is laminated on the belt 96 at an inner side, in the axial direction, of the first end 110a of the belt 96. An end of the second ribbon is laminated on the belt 96 at an inner side, in the axial direction, of the second end 110b of the belt 96.

In the manufacturing method, the distance in the axial direction from the end of the first ribbon to the first end 110a of the belt 96 influences the width, in the axial direction, of the first edge portion E1 which forms a portion of the band 98. From the standpoint that the first edge portion E1 can sufficiently hold a portion at the first end 110a of the belt 96, the distance is preferably equal to or greater than 30 mm. From the standpoint that stiffness balance of the band 98 can be appropriately maintained, the distance is preferably equal to or less than 50 mm. It should be noted that the distance corresponds to the aforementioned distance W1.

In the manufacturing method, the distance in the axial direction from the end of the second ribbon to the second end 110b of the belt 96 influences the width, in the axial direction, of the second edge portion E2 which forms another portion of the band 98. From the standpoint that the second edge portion E2 can sufficiently hold a portion at the second end 110b of the belt 96, the distance is preferably equal to or greater than 30 mm. From the standpoint that stiffness balance of the band 98 can be appropriately maintained, the distance is preferably equal to or less than 50 mm. It should be noted that the distance corresponds to the aforementioned distance W2.

Although not shown, in the manufacturing method, a first pressing roller R1 presses the first ribbon laminated on the belt 96, against the belt 96. By so doing, the first ribbon is attached to the belt 96. A second pressing roller R2 presses the second ribbon laminated on the belt 96, against the belt 96. By so doing, the second ribbon is attached to the belt 96.

In the manufacturing method, due to rotation of the drum D, the first ribbon fed from the first head H1 is wound on the belt 96 and attached thereto. Therefore, the position of the end of the first ribbon attached to the belt 96 is a start position of the attachment of the first ribbon. In the manufacturing method, due to the rotation of the drum D, the second ribbon fed from the second head H2 is wound on the belt 96 and attached thereto. Therefore, the position of the end of the second ribbon attached to the belt 96 is a start position of the attachment of the second ribbon. In the manufacturing method, the attachment of the first ribbon and the attachment of the second ribbon to the belt 96 are started at positions different from each other in the circumferential direction. As described above, the tire 86 is manufactured in the same manner as the tire 2 shown in FIG. 1. Therefore, a center angle α which represents a relative position of the start position of the attachment of the second ribbon relative to the start position of the attachment of the first ribbon is preferably equal to or greater than 22° and preferably equal to or less than 30°. Thus, a high-quality tire 86 can be stably produced.

Although not shown, in the manufacturing method, the first ribbon whose end is laminated on the belt 96 is helically wound while the first head H1 is moved in the axial direction toward the first end 110a of the belt 96. The second ribbon whose end is laminated on the belt 96 is helically wound while the second head H2 is moved in the axial direction toward the second end 110b of the belt 96.

In the manufacturing method, when the first ribbon covers a portion at the first end 110a of the belt 96, the movement of the first head H1 is stopped. The rotation of the drum D is not stopped, and thus the first ribbon is wound in the circumferential direction at the first end 110a of the belt 96.

In the manufacturing method, the winding of the first ribbon in the circumferential direction can suppress lifting at the first end 110a of the belt 96. From the standpoint that a tire 86 having excellent durability can be obtained, a rotation angle β1 of the drum D in the winding of the first ribbon in the circumferential direction is preferably equal to or greater than 180°. From the standpoint that the stiffness at the first end 110a of the belt 96 can be appropriately maintained, the rotation angle β1 is preferably equal to or less than 360°.

In the manufacturing method, when the second ribbon covers a portion at the second end 110b of the belt 96, the movement of the second head H2 is stopped. The rotation of the drum D is not stopped, and thus the second ribbon is wound in the circumferential direction at the second end 110b of the belt 96.

In the manufacturing method, the winding of the second ribbon in the circumferential direction can suppress lifting at the second end 110b of the belt 96. From the standpoint that a tire 86 having excellent durability can be obtained, a rotation angle β2 of the drum D in the winding of the second ribbon in the circumferential direction is preferably equal to or greater than 180°. From the standpoint that the stiffness at the second end 110b of the belt 96 can be appropriately maintained, the rotation angle β2 is preferably equal to or less than 360°.

In the manufacturing method, after the winding of the first ribbon in the circumferential direction is completed, the first ribbon is further helically wound while the first head H1 is moved inward in the axial direction. After the winding of the second ribbon in the circumferential direction is completed, the second ribbon is further helically wound while the second head H2 is moved inward in the axial direction. The first ribbon and the second ribbon are wound so as to intersect each other at a position corresponding to the equator plane of the tire 86.

In the manufacturing method, even after the first ribbon and the second ribbon are caused to intersect each other at the equator plane, the first ribbon is further helically wound while the first head H1 is moved in the axial direction toward the second end 110b of the belt 96. The second ribbon is further helically wound while the second head H2 is moved in the axial direction toward the first end 110a of the belt 96. In the manufacturing method, the winding of the first ribbon is completed such that a termination end of the first ribbon is laminated near a second end 132b of the outer layer 130b which forms a portion of the belt 96. The winding of the second ribbon is completed such that a termination end of the second ribbon is laminated near a first end 132a of the outer layer 130b. Thus, the band 98 in which the first element 112 and the second element 114 intersect each other at the equator plane is obtained. Components such as the tread 88 are further combined to obtain a raw cover.

In the manufacturing method, the raw cover is put into a mold (not shown). Thus, the outer surface of the raw cover abuts against the cavity surface of the mold. The inner surface of the raw cover abuts against a bladder or a core. The raw cover is pressurized and heated in the mold. The rubber composition in the raw cover flows due to the pressurization and the heating. Cross-linking reaction is caused in the rubber due to the heating, to obtain the tire 86.

As described above, in the manufacturing method, the first ribbon and the second ribbon are wound so as to intersect each other at the position corresponding to the equator plane of the tire 86. Thus, cross sections of the first ribbon and cross sections of the second ribbon are arranged in the axial direction without any gap. In the manufacturing method, a gap in which the first ribbon and the second ribbon are not present is not formed in a portion of the band 98 at the equator plane as in an existing tire. Formation of unevenness caused by formation of the gap is prevented, and thus the tire 86 obtained by the manufacturing method is excellent in uniformity.

### EXAMPLES

The following will show effects of the present invention by means of examples, but the present invention should not be construed in a limited manner based on the description of these examples.

### [Example 1]

A pneumatic tire having the structure shown in FIG. 1 was produced. The size of the tire is "245/40ZR18 97Y FK452". In the production, in a former including a cylindrical drum, a first head, and a second head, a sheet was wound around the drum to form a belt. A first ribbon including first cords was fed from the first head, and an end of the first ribbon was laminated on the belt at an inner side, in the axial direction, of a first end of the belt. The distance W1 in the axial direction from the end of the first ribbon to the first end of the belt was set at 40 mm. A second ribbon including second cords was fed from the second head, and an end of the second ribbon was laminated on the belt at an inner side, in the axial direction, of a second end of the belt. The distance W2 in the axial direction from the end of the second ribbon to the second end of the belt was set at 40 mm. A center angle α which represents a relative position of a start position of attachment of the second ribbon relative to a start position of attachment of the first ribbon was set at 26°.

The first ribbon was helically wound while the first head was moved in the axial direction toward the first end of the belt. The second ribbon was helically wound while the second head was moved in the axial direction toward the second end of the belt. A rotation speed of the drum in the winding was set at 250 m/min.

At the first end of the belt, the first ribbon was wound in the circumferential direction. A center angle β1 in the winding of the first ribbon in the circumferential direction was set at 180°. Then, the first ribbon was further helically wound while the first head was moved inward in the axial direction. At the second end of the belt, the second ribbon was wound in the circumferential direction. A center angle β2 in the winding of the second ribbon in the circumferential direction was set at 180°. Then, the second ribbon was further helically wound while the second head was moved inward in the axial direction. Furthermore, at a position corresponding to the equator plane of the tire, the first ribbon and the second ribbon were wound so as to intersect each other. This is indicated as "Y" in the cells for intersection in tables. In a portion of the band of the tire at the equator plane, no gap in which the first ribbon and the second ribbon are not present is formed.

In Example 1, a first element formed of the first ribbon is turned up at the first end of the belt. A second element formed of the second ribbon is turned up at the second end of the belt. This is indicated as "Y" in the cells for turning-up in the tables.

Cords each formed from an aramid fiber were used for the first cords. The initial modulus M1 of each first cord was 76.3 cN/dtex. The first ribbon includes ten first cords. The width RW1 of the first ribbon was set at 10.6 mm. The pitch LP1 of the first ribbon was set at 10.3 mm. Cords each formed from a nylon fiber were used for the second cords. The initial modulus M2 of each second cord was 16.7 cN/dtex. Therefore, the ratio of the initial modulus M2 of each first cord to the initial modulus M2 of each second cord was 4.6. The second ribbon includes ten second cords. The width RW2 of the second ribbon was set at 10.7 mm. The pitch LP2 of the second ribbon was set at 10.3 mm.

### [Example 2]

A tire having the structure shown in FIG. 17 was produced by the same manufacturing method as in Example 1.

### [Examples 3 to 8]

Tires were produced in the same manner as Example 1, except the first cords and the second cords were changed such that the initial modulus ratio (M1/M2) was as shown in Table 2 below. In Table 2, "PEN" represents a polyethylene naphthalate fiber. The initial modulus of each cord formed from the polyethylene naphthalate fiber was 49.3 cN/dtex.

### [Examples 9 to 12]

Tires were produced in the same manner as Example 1, except the distance W1 and the distance W2 were as shown in Table 3 below.

### [Examples 13 to 17]

Tires were produced in the same manner as Example 1, except the rotation speed of the drum was as shown in Table 4 below.

### [Examples 18 to 22]

Tires were produced in the same manner as Example 1, except the center angle α was as shown in Table 5 below.

### [Examples 23 to 27]

Tires were produced in the same manner as Example 1, except the rotation angle β1 and the rotation angle β2 were as shown in Table 6 below.

### [Comparative Example 1]

In Comparative Example 1, an end of each of a first ribbon and a second ribbon were laminated on a belt at the equator plane. Until the drum made 3/4 rotation after winding of the first ribbon and the second ribbon was started, the first ribbon and the second ribbon were wound in the circumferential direction along the equator plane. Then, the first ribbon was helically wound toward a first end of the belt. At the first end of the belt, the winding was stopped. The second ribbon was helically wound toward a second end of the belt. At the second end of the belt, the winding was stopped. Comparative Example 1 is an existing manufacturing method. It should be noted that a ribbon that is the same as the first ribbon in Example 1 was used for the first ribbon. A ribbon that is the same as the second ribbon in Example 1 was used for the second ribbon. In a tire manufactured in Comparative Example 1, elements that form a band are not turned up at the ends of the belt. This is indicated as "N" in the cells for turning-up in the tables. At the equator plane, the element formed of the first ribbon and the element formed of the second ribbon do not intersect each other. This is indicated as "N" in the cells for intersection in the tables. In a portion of the band of the tire at the equator plane, a gap in which no ribbon is present is formed. It should be noted that the configuration of the tire except for the band is the same as that of the tire shown in FIG. 1.

### [Comparative Example 2]

In Comparative Example 2, a ribbon was wound from a first end of a belt toward a second end of the belt by using only the first head. Therefore, in a band formed of the ribbon, intersection of elements is not formed as in the band of the tire shown in FIG. 1. A ribbon that is the same as the first ribbon in Example 1 was used for the ribbon. In a tire manufactured in Comparative Example 2, an element that forms the band is not turned up at any end of the belt. In a portion of the band of the tire at the equator plane, no gap in which no ribbon is present is formed. It should be noted that the configuration of the tire except for the band is the same as that of the tire shown in FIG. 1.

### [Comparative Example 3]

In Comparative Example 3, an end of each of a first ribbon and a second ribbon was laminated on a belt at the equator plane. The first ribbon was helically wound toward a first end of the belt. Movement of the first head was reversed at the first end of the belt, and the first ribbon was further helically wound toward the equator plane. The winding was stopped at the equator plane. In Comparative Example 3, a first element formed of the first ribbon is turned up at the first end of the belt. The second ribbon was helically wound toward a second end of the belt. Movement of the second head was reversed at the second end of the belt, and the second ribbon was further helically wound toward the equator plane. The winding was stopped at the equator plane. In Comparative Example 3, a second element formed of the second ribbon is turned up at the second end of the belt. In Comparative Example 3, the element formed of the first ribbon and the element formed of the second ribbon do not intersect each other at the equator plane. In a portion of the band of the tire at the equator plane, a gap in which no ribbon is present is formed. It should be noted that the configuration of the tire except for the band is the same as that of the tire shown in FIG. 1.

### [High-Speed Durability]

High-speed durability was evaluated according to the ECE30 standard and under a condition where a camber angle was set at 3° such that a high load was applied to the first side S1 side. A speed V (km/h) at which damage occurred in a sample tire was obtained. The results are shown in Tables 1 to 6 below. A higher speed represents being excellent in high-speed durability. In the tables, "G" represents the case where no damage was observed, and "NG" represents the case where damage was observed.

### [Uniformity]

A radial force variation (RFV), the first harmonic (RH1) of the RFV, radial run-out (PRO), conicity (CON), and a spring rate were measured according to the conditions of the uniformity test specified in "JASO C607:2000". The average of results obtained by measurements for 20 tires is shown in Tables 1 to 6 below. Regarding the items other than CON, the lower the value is, the higher the evaluation is. Regarding CON, the lower the absolute value of the value is, the higher the evaluation is.

### [Productivity]

The time taken to produce each tire was counted. In Tables 1 to 6 below, the results are indicated as indexes for which the result of Example 15 is defined as 0. The lower the value is, the higher the evaluation is.

### [Table 1]

**Table 1 Results of Evaluation**

| | | | Comp. Ex. 1 | Comp. Ex. 2 | Comp. Ex. 3 | Ex. 1 | Ex. 2 |
|---|---|---|---|---|---|---|---|
| Configuration of tire | | | - | - | - | FIG. 1 | FIG.17 |
| Number of heads | | | 2 | 1 | 2 | 2 | 2 |
| First cords | Material | | Aramid | Aramid | Aramid | Aramid | Aramid |
| | Initial modulus M1 [cN/dtex] | | 76.3 | 76.3 | 76.3 | 76.3 | 76.3 |
| Second cords | Material | | Nylon | - | Nylon | Nylon | Nylon |
| | Initial modulus M2 [cN/dtex] | | 16.7 | - | 16.7 | 16.7 | 16.7 |
| Ratio (M1/M2) [-] | | | 4.6 | - | 4.6 | 4.6 | 4.6 |
| Center angle α [degree(s)] | | | - | - | - | 26 | 26 |
| Distance W1 [mm] | | | - | - | - | 40 | 40 |
| Distance W2 [mm] | | | - | - | - | 40 | 40 |
| Turning-up | | | N | N | Y | Y | Y |
| Rotation angle β1 [degree(s)] | | | - | - | - | 180 | 180 |
| Rotation angle β2 [degree(s)] | | | - | - | - | 180 | 180 |
| Intersection | | | N | N | N | Y | Y |
| Rotation speed [m/min] | | | 180 | 250 | 180 | 250 | 250 |
| High-speed durability | | 280 km/h | G | G | G | G | G |
| | | 290 km/h | G | G | G | G | G |
| | | 300 km/h | NG | NG | G | G | G |
| | | 310 km/h | - | - | NG | G | G |
| | | 320 km/h | - | - | - | G | G |
| | | 330 km/h | - | - | - | G | G |
| Uniformity | | RFV [N] | 81.4 | 56.9 | 75.3 | 58.8 | 58.2 |
| | | RH1 [N] | 48.8 | 34.6 | 43.9 | 35.9 | 32.3 |
| | | RRO [mm] | 0.49 | 0.27 | 0.42 | 0.26 | 0.25 |
| | | CON [N] | -127 | -135 | -119 | 4.0 | 6.2 |
| | | Spring rate [%] | 1.46 | ≤0.1 | 0.61 | ≤0.1 | ≤0.1 |
| Productivity | | | 0 | -5 | 0 | -5 | -5 |

### [Table 2]

**Table 2 Results of Evaluation**

| | | | Ex.3 | Ex.4 | Ex.5 | Ex.6 | Ex.7 | Ex.8 |
|---|---|---|---|---|---|---|---|---|
| Configuration of tire | | | FIG. 1 | FIG. 1 | FIG. 1 | FIG. 1 | FIG. 1 | FIG. 1 |
| Number of heads | | | 2 | 2 | 2 | 2 | 2 | 2 |
| First cords | Material | | Nylon | PEN | PEN | PEN | Aramid | Aramid |
| | Initial modulus M1 [cN/dtex] | | 16.7 | 49.3 | 49.3 | 49.3 | 76.3 | 76.3 |
| Second cords | Material | | Nylon | Aramid | PEN | Nylon | Aramid | PEN |
| | Initial modulus M2 [cN/dtex] | | 16.7 | 76.3 | 49.3 | 16.7 | 76.3 | 49.3 |
| Ratio (M1/M2) [-] | | | 1.0 | 0.65 | 1.0 | 3.0 | 1.0 | 1.5 |
| Center angle α [degree(s)] | | | 26 | 26 | 26 | 26 | 26 | 26 |
| Distance W1 [mm] | | | 40 | 40 | 40 | 40 | 40 | 40 |
| Distance W2 [mm] | | | 40 | 40 | 40 | 40 | 40 | 40 |
| Turning-up | | | Y | Y | Y | Y | Y | Y |
| Rotation angle β1 [degree(s)] | | | 180 | 180 | 180 | 180 | 180 | 180 |
| Rotation angle β2 [degree(s)] | | | 180 | 180 | 180 | 180 | 180 | 180 |
| Intersection | | | Y | Y | Y | Y | Y | Y |
| Rotation speed [m/min] | | | 250 | 250 | 250 | 250 | 250 | 250 |
| High-speed durability | | 280 km/h | G | G | G | G | G | G |
| | | 290 km/h | G | G | G | G | G | G |
| | | 300 km/h | G | G | G | G | G | G |
| | | 310 km/h | G | G | G | G | G | G |
| | | 320 km/h | NG | NG | G | G | G | G |
| | | 330 km/h | - | - | NG | G | NG | G |
| Uniformity | | RFV [N] | 54.5 | 64.2 | 72.5 | 62.4 | 58.7 | 63.3 |
| | | RH1 [N] | 28.3 | 33.8 | 40.1 | 32.8 | 29.8 | 31. 9 |
| | | RRO [mm] | 0.26 | 0.30 | 0.31 | 0.29 | 0.27 | 0.29 |
| | | CON [N] | -12.5 | 12.6 | 5.7 | 10.0 | -5.7 | -11.5 |
| | | Spring rate [%] | ≤0.1 | ≤0.1 | 0.27 | ≤0.1 | ≤0.1 | ≤0.1 |
| Productivity | | | -5 | -5 | -5 | -5 | -5 | -5 |

### [Table 3]

**Table 3 Results of Evaluation**

| | | | Ex.9 | Ex.10 | Ex.11 | Ex.12 |
|---|---|---|---|---|---|---|
| Configuration of tire | | | FIG. 1 | FIG. 1 | FIG. 1 | FIG. 1 |
| Number of heads | | | 2 | 2 | 2 | 2 |
| First cords | Material | | Aramid | Aramid | Aramid | Aramid |
| | Initial modulus M1 [cN/dtex] | | 76.3 | 76.3 | 76.3 | 76.3 |
| Second cords | Material | | Nylon | Nylon | Nylon | Nylon |
| | Initial modulus M2 [cN/dtex] | | 16.7 | 16.7 | 16.7 | 16.7 |
| Ratio (M1/M2) [-] | | | 4.6 | 4.6 | 4.6 | 4.6 |
| Center angle α [degree(s)] | | | 26 | 26 | 26 | 26 |
| Distance W1 [mm] | | | 20 | 30 | 50 | 60 |
| Distance W2 [mm] | | | 20 | 30 | 50 | 60 |
| Turning-up | | | Y | Y | Y | Y |
| Rotation angle β1 [degree(s)] | | | 180 | 180 | 180 | 180 |
| Rotation angle β2 [degree(s)] | | | 180 | 180 | 180 | 180 |
| Intersection | | | Y | Y | Y | Y |
| Rotation speed [m/min] | | | 250 | 250 | 250 | 250 |
| High-speed durability | | 280 km/h | G | G | G | G |
| | | 290 km/h | G | G | G | G |
| | | 300 km/h | G | G | G | G |
| | | 310 km/h | G | G | G | G |
| | | 320 km/h | NG | G | G | NG |
| | | 330 km/h | - | G | NG | - |
| Uniformity | | RFV [N] | 58.1 | 56.3 | 55.8 | 56.1 |
| | | RH1 [N] | 26.3 | 27.9 | 25.9 | 26.8 |
| | | RRO [mm] | 0.26 | 0.27 | 0.25 | 0.26 |
| | | CON [N] | 7.3 | 5.6 | 10.1 | 9.1 |
| | | Spring rate [%] | ≤0.1 | ≤0.1 | ≤0.1 | ≤0.1 |
| Productivity | | | -5 | -5 | -5 | -5 |

### [Table 4]

**Table 4 Results of Evaluation**

| | | | Ex.13 | Ex. 14 | Ex.15 | Ex.16 | Ex.17 |
|---|---|---|---|---|---|---|---|
| Configuration of tire | | | FIG. 1 | FIG. 1 | FIG. 1 | FIG. 1 | FIG. 1 |
| Number of heads | | | 2 | 2 | 2 | 2 | 2 |
| First cords | Material | | Aramid | Aramid | Aramid | Aramid | Aramid |
| | Initial modulus M1 [cN/dtex] | | 76.3 | 76.3 | 76.3 | 76.3 | 76.3 |
| Second cords | Material | | Nylon | Nylon | Nylon | Nylon | Nylon |
| | Initial modulus M2 [cN/dtex] | | 16.7 | 16.7 | 16.7 | 16.7 | 16.7 |
| Ratio (M1/M2) [-] | | | 4.6 | 4.6 | 4.6 | 4.6 | 4.6 |
| Center angle α [degree(s)] | | | 26 | 26 | 26 | 26 | 26 |
| Distance W1 [mm] | | | 40 | 40 | 40 | 40 | 40 |
| Distance W2 [mm] | | | 40 | 40 | 40 | 40 | 40 |
| Turning-up | | | Y | Y | Y | Y | Y |
| Rotation angle β1 [degree(s)] | | | 180 | 180 | 180 | 180 | 180 |
| Rotation angle β2 [degree(s)] | | | 180 | 180 | 180 | 180 | 180 |
| Intersection | | | Y | Y | Y | Y | Y |
| Rotation speed [m/min] | | | 180 | 200 | 220 | 240 | 260 |
| High-speed durability | | 280 km/h | G | G | G | G | G |
| | | 290 km/h | G | G | G | G | G |
| | | 300 km/h | G | G | G | G | G |
| | | 310 km/h | G | G | G | G | G |
| | | 320 km/h | G | G | G | G | NG |
| | | 330 km/h | NG | G | G | G | - |
| Uniformity | | RFV [N] | 57.2 | 56.3 | 56.9 | 57.3 | 58.4 |
| | | RH1 [N] | 34.9 | 33.9 | 34.3 | 34.7 | 34.1 |
| | | RRO [mm] | 0.25 | 0.28 | 0.27 | 0.26 | 0.39 |
| | | CON [N] | 2.3 | 4.1 | 3.3 | 2.9 | 5.1 |
| | | Spring rate [%] | ≤0.1 | ≤0.1 | ≤0.1 | ≤0.1 | 1.2 |
| Productivity | | | 0 | -1 | -2 | -3 | -6 |

### [Table 5]

**Table 5 Results of Evaluation**

| | | | Ex.18 | Ex.19 | Ex.20 | Ex.21 | Ex.22 |
|---|---|---|---|---|---|---|---|
| Configuration of tire | | | FIG. 1 | FIG. 1 | FIG. 1 | FIG. 1 | FIG. 1 |
| Number of heads | | | 2 | 2 | 2 | 2 | 2 |
| First cords | Material | | Aramid | Aramid | Aramid | Aramid | Aramid |
| | Initial modulus M1 [cN/dtex] | | 76.3 | 76.3 | 76.3 | 76.3 | 76.3 |
| Second cords | Material | | Nylon | Nylon | Nylon | Nylon | Nylon |
| | Initial modulus M2 [cN/dtex] | | 16.7 | 16.7 | 16.7 | 16.7 | 16.7 |
| Ratio (M1/M2) [-] | | | 4.6 | 4.6 | 4.6 | 4.6 | 4.6 |
| Center angle α [degree(s)] | | | 0 | 17 | 22 | 27 | 30 |
| Distance W1 [mm] | | | 40 | 40 | 40 | 40 | 40 |
| Distance W2 [mm] | | | 40 | 40 | 40 | 40 | 40 |
| Turning-up | | | Y | Y | Y | Y | Y |
| Rotation angle β1 [degree(s)] | | | 180 | 180 | 180 | 180 | 180 |
| Rotation angle β2 [degree(s)] | | | 180 | 180 | 180 | 180 | 180 |
| Intersection | | | Y | Y | Y | Y | Y |
| Rotation speed [m/min] | | | 250 | 250 | 250 | 250 | 250 |
| High-speed durability | | 280 km/h | G | G | G | G | G |
| | | 290 km/h | G | G | G | G | G |
| | | 300 km/h | G | G | G | G | G |
| | | 310 km/h | G | G | G | G | G |
| | | 320 km/h | NG | G | G | G | NG |
| | | 330 km/h | - | NG | G | G | - |
| Uniformity | | RFV [N] | 73.3 | 63.1 | 56.9 | 62.4 | 58.4 |
| | | RH1 [N] | 39.8 | 37.1 | 25.3 | 27.6 | 34.2 |
| | | RRO [mm] | 0.36 | 0.28 | 0.27 | 0.29 | 0.39 |
| | | CON [N] | -12.5 | -5.9 | 6.1 | 10.0 | 27.3 |
| | | Spring rate [%] | 0.26 | 0.14 | ≤0.1 | ≤0.1 | 0.9 |
| Productivity | | | -5 | -5 | -5 | -5 | -5 |

### [Table 6]

**Table 6 Results of Evaluation**

| | | | Ex.23 | Ex.24 | Ex.25 | Ex.26 | Ex.27 |
|---|---|---|---|---|---|---|---|
| Configuration of tire | | | FIG. 1 | FIG. 1 | FIG. 1 | FIG. 1 | FIG. 1 |
| Number of heads | | | 2 | 2 | 2 | 2 | 2 |
| First cords | Material | | Aramid | Aramid | Aramid | Aramid | Aramid |
| | Initial modulus M1 [cN/dtex] | | 76.3 | 76.3 | 76.3 | 76.3 | 76.3 |
| Second cords | Material | | Nylon | Nylon | Nylon | Nylon | Nylon |
| | Initial modulus M2 [cN/dtex] | | 16.7 | 16.7 | 16.7 | 16.7 | 16.7 |
| Ratio (M1/M2) [-] | | | 4.6 | 4.6 | 4.6 | 4.6 | 4.6 |
| Center angle α [degree(s)] | | | 26 | 26 | 26 | 26 | 26 |
| Distance W1 [mm] | | | 40 | 40 | 40 | 40 | 40 |
| Distance W2 [mm] | | | 40 | 40 | 40 | 40 | 40 |
| Turning-up | | | Y | Y | Y | Y | Y |
| Rotation angle β1 [degree(s)] | | | 60 | 240 | 300 | 360 | 420 |
| Rotation angle β2 [degree(s)] | | | 60 | 240 | 300 | 360 | 420 |
| Intersection | | | Y | Y | Y | Y | Y |
| Rotation speed [m/min] | | | 250 | 250 | 250 | 250 | 250 |
| High-speed durability | | 280 km/h | G | G | G | G | G |
| | | 290 km/h | G | G | G | G | G |
| | | 300 km/h | G | G | G | G | G |
| | | 310 km/h | G | G | G | G | G |
| | | 320 km/h | NG | G | G | G | NG |
| | | 330 km/h | - | G | G | G | - |
| Uniformity | | RFV [N] | 56.3 | 53.6 | 57.2 | 59.3 | 53.6 |
| | | RH1 [N] | 27.5 | 26.4 | 25.6 | 27.2 | 31.9 |
| | | RRO [mm] | 0.26 | 0.26 | 0.26 | 0.28 | 0.31 |
| | | CON [N] | -59.0 | -1.9 | 7.8 | 10.2 | 20.5 |
| | | Spring rate [%] | 0.17 | ≤0.1 | ≤0.1 | ≤0.1 | 0.7 |
| Productivity | | | -5 | -5 | -5 | -5 | -5 |

As shown in Tables 1 to 6, the evaluation is higher in the manufacturing methods of the examples than in the manufacturing methods of the comparative examples. From the results of evaluation, advantages of the present invention are clear.

### DESCRIPTION OF THE REFERENCE CHARACTERS

2, 86···tire
4, 88···tread
6, 90···sidewall
8, 92···bead
10, 94···carcass
12, 96···belt
14, 98···band
36a, 110a···first end
36b, 110b···second end
42, 112···first element
44, 114···second element
48a, 48b, 118a, 118b···first main body
50, 120···first turned-up portion
54a, 54b, 124a, 124b···second main body
56, 126···second turned-up portion
58···first ribbon
60···first cord
62···topping rubber
64···second ribbon
66···second cord
68···topping rubber

## Claims

1. A method for manufacturing a pneumatic tire (2) by using a former including a cylindrical drum (D), a first head (H1), and a second head (H2), the method comprising the steps of:
winding a sheet around the drum (D) to obtain a belt (12);
feeding a first ribbon (58) including a first cord (60) from the first head (H1), laminating an end (70) of the first ribbon (58) on the belt (12) at an inner side, in an axial direction, of a first end (36a) of the belt (12), feeding a second ribbon (64) including a second cord (66) from the second head (H2), and laminating an end (72) of the second ribbon (H2) on the belt (12) at an inner side, in the axial direction, of a second end (36b) of the belt (12);
helically winding the first ribbon (58) while moving the first head (H1) in the axial direction toward the first end (36a) of the belt (12), and helically winding the second ribbon (64) while moving the second head (H2) in the axial direction toward the second end (36b) of the belt (12);
**characterized by**
winding the first ribbon (58) in a circumferential direction at the first end (36a) of the belt (12) and winding the second ribbon (64) in the circumferential direction at the second end (36b) of the belt (12);
further helically winding the first ribbon (58) while moving the first head (H1) inward in the axial direction and further helically winding the second ribbon (64) while moving the second head (H2) inward in the axial direction; and
winding the first ribbon (58) and the second ribbon (64) such that the first ribbon (58) and the second ribbon (64) intersect each other at a position corresponding to an equator plane (CL) of a tire (2).

2. The method for manufacturing a pneumatic tire according to claim 1, wherein
a distance (W1) in the axial direction from the end (70) of the first ribbon (58) laminated on the belt (12) to the first end (36a) of the belt (12) is equal to or greater than 30 mm but equal to or less than 50 mm, and
a distance (W2) in the axial direction from the end (72) of the second ribbon (64) laminated on the belt (12) to the second end (36b) of the belt (12) is equal to or greater than 30 mm but equal to or less than 50 mm.

3. The method for manufacturing a pneumatic tire according to claim 1, wherein a rotation angle (β1, β2) of the drum (D) in winding of the first ribbon (58) and the second ribbon (64) in the circumferential direction is equal to or greater than 180° but equal to or less than 360°.

4. The method for manufacturing a pneumatic tire according to claim 1, wherein an initial modulus of the first cord (60) is higher than an initial modulus of the second cord (66).

5. The method for manufacturing a pneumatic tire according to claim 4, wherein, when the pneumatic tire is mounted on a vehicle, the first end (36a) of the belt (12) is located at an inner side in a width direction of the vehicle and the second end (36b) of the belt (12) is located at an outer side in the width direction of the vehicle.

6. The method for manufacturing a pneumatic tire according to claim 1, wherein
a width (RW1) of the first ribbon (58) is equal to or greater than 10 mm but equal to or less than 11 mm, and
a width (RW2) of the second ribbon (64) is equal to or greater than 10 mm but equal to or less than 11 mm.

7. The method for manufacturing a pneumatic tire according to claim 1, wherein
the first ribbon (58) is helically wound at a pitch (LP1) which is equal to or greater than 9.8 mm but equal to or less than 11.0 mm; and
the second ribbon (64) is helically wound at a pitch (LP2) which is equal to or greater than 9.8 mm but equal to or less than 11.0 mm.

8. A pneumatic tire comprising:
a tread (4) having an outer surface which forms a tread surface;
a pair of sidewalls (6) extending from ends, respectively, of the tread (4) substantially inward in a radial direction;
a pair of beads (8) located substantially inward of the sidewalls (6), respectively, in the radial direction;
a carcass (10) extending on and between one of the beads (8) and the other bead (8) along and inward of the tread (4) and the sidewalls (6);
a belt (12) laminated on the carcass (10) at an inner side, in the radial direction, of the tread (4); and
a band (14) located between the belt (12) and the tread (4) and covering the belt (12), wherein
the band (14) includes a first element (42) formed by helically winding a first ribbon (58) and a second element (44) formed by helically winding a second ribbon (64),
**characterized in that**
an end (70) of the first element (42) is located inward of a first end (36a) of the belt (12) in an axial direction, and the first ribbon (58) is wound toward the first end (36a) of the belt (12) and wound in a circumferential direction at the first end (36a) of the belt (12); the first element (42) is turned up at the first end (36a) of the belt (12),
an end (72) of the second element (44) is located inward of a second end (36b) of the belt (12) in the axial direction, and the second ribbon (64) is wound toward the second end (36b) of the belt (12) and wound in the circumferential direction at the second end (36b) of the belt (12);
the second element (44) is turned up at the second end (36b) of the belt (12),
the first element (42) and the second element (44) intersect each other at an equator plane (CL),
the first ribbon (58) includes a first cord (60),
in the first element (42), the first cord (60) extends in substantially a circumferential direction and is helically wound,
the second ribbon (64) includes a second cord (66), and
in the second element (44), the second cord (66) extends in substantially the circumferential direction and is helically wound.

## Patentansprüche

1. Verfahren zum Herstellen eines Luftreifens (2) unter Verwendung einer Formgebungseinrichtung, die eine zylindrische Trommel (D), einen ersten Kopf (H1) und einen zweiten Kopf (H2) umfasst, wobei das Verfahren die Schritte umfasst:
Wickeln einer Bahn um die Trommel (D) herum, um einen Gürtel (12) zu erhalten;
Zuführen eines ersten Streifens (58), der einen ersten Kord (60) umfasst, von dem ersten Kopf (H1), Laminieren eines Endes (70) des ersten Streifens (58) auf den Gürtel (12) auf einer Innenseite in einer axialen Richtung eines ersten Endes (36a) des Gürtels (12), Zuführen eines zweiten Streifens (64), der einen zweiten Kord (66) umfasst, von dem zweiten Kopf (H2) und Laminieren eines Endes (72) des zweiten Streifens (H2) auf den Gürtel (12) auf einer Innenseite in der axialen Richtung eines zweiten Endes (36b) des Gürtels (12);
wendelförmiges Wickeln des ersten Streifens (58), während der erste Kopf (H1) in der axialen Richtung zu dem ersten Ende (36a) des Gürtels (12) hin bewegt wird, und wendelförmiges Wickeln des zweiten Streifens (64), während der zweite Kopf (H2) in der axialen Richtung zu dem zweiten Ende (36b) des Gürtels (12) hin bewegt wird;
**gekennzeichnet durch**
Wickeln des ersten Streifens (58) in einer Umfangsrichtung an dem ersten Ende (36a) des Gürtels (12) und Wickeln des zweiten Streifens (64) in der Umfangsrichtung an dem zweiten Ende (36b) des Gürtels (12);
weiteres wendelförmiges Wickeln des ersten Bandes (58), während der erste Kopf (H1) in der axialen Richtung nach innen bewegt wird, und weiteres wendelförmiges Wickeln des zweiten Streifens (64), während der zweite Kopf (H2) in der axialen Richtung nach innen bewegt wird; und
Wickeln des ersten Streifens (58) und des zweiten Streifens (64), so dass der erste Streifen (58) und der zweite Streifen (64) einander an einer Position schneiden, die einer Äquatorebene (CL) eines Reifens (2) entspricht.

2. Verfahren zum Herstellen eines Luftreifens nach Anspruch 1, wobei
ein Abstand (W1) in der axialen Richtung von dem Ende (70) des ersten Streifens (58), das auf den Gürtel (12) laminiert ist, zu dem ersten Ende (36a) des Gürtels (12) gleich oder größer als 30 mm aber gleich oder kleiner als 50 mm ist, und
ein Abstand (W2) in der axialen Richtung von dem Ende (72) des zweiten Streifens (64), das auf den Gürtel (12) laminiert ist, zu dem zweiten Ende (36b) des Gürtels (12) gleich oder größer als 30 mm aber gleich oder kleiner als 50 mm ist.

3. Verfahren zum Herstellen eines Luftreifens nach Anspruch 1, wobei ein Drehwinkel (β1, β2) der Trommel (D) beim Wickeln des ersten Streifens (58) und des zweiten Streifens (64) in der Umfangsrichtung gleich oder größer als 180° aber gleich oder kleiner als 360° ist.

4. Verfahren zum Herstellen eines Luftreifens nach Anspruch 1, wobei ein Anfangsmodul des ersten Kords (60) höher ist als ein Anfangsmodul des zweiten Kords (66).

5. Verfahren zum Herstellen eines Luftreifens nach Anspruch 4, wobei, wenn der Luftreifen an einem Fahrzeug montiert ist, das erste Ende (36a) des Gürtels (12) auf einer Innenseite in einer Breitenrichtung des Fahrzeugs gelegen ist, und das zweite Ende (36b) des Gürtels (12) auf einer Außenseite in der Breitenrichtung des Fahrzeugs gelegen ist.

6. Verfahren zum Herstellen eines Luftreifens nach Anspruch 1, wobei
eine Breite (RW1) des ersten Streifens (58) gleich oder größer als 10 mm aber gleich oder kleiner 11 mm ist, und
eine Breite (RW2) des zweiten Streifens (64) gleich oder größer als 10 mm aber gleich oder kleiner als 11 mm ist.

7. Verfahren zum Herstellen eines Luftreifens nach Anspruch 1, wobei
der erste Streifen (58) mit einer Steigung (LP1) wendelförmig gewickelt wird, welche gleich oder größer als 9,8 mm aber gleich oder kleiner als 11,0 mm ist; und
der zweite Streifen (64) mit einer Steigung (LP2) wendelförmig gewickelt wird, die gleich oder größer als 9,8 mm aber gleich oder kleiner als 11,0 mm ist.

8. Luftreifen, umfassend:
eine Lauffläche (4) mit einer Außenfläche, die eine Laufflächen-Oberfläche bildet;
ein Paar Seitenwände (6), die sich jeweils von Enden der Lauffläche (4) im Wesentlichen nach innen in einer radialen Richtung erstrecken;
ein Paar Wülste (8), die jeweils im Wesentlichen innen von den Seitenwänden (6) in der radialen Richtung gelegen sind;
eine Karkasse (10), die sich auf und zwischen einem der Wülste (8) und dem anderen der Wülste (8) entlang und innen von der Lauffläche (4) und den Seitenwänden (6) erstreckt;
einen Gürtel (12), der auf die Karkasse (10) auf einer Innenseite in der radialen Richtung der Lauffläche (4) laminiert ist; und
ein Band (14), das zwischen dem Gürtel (12) und der Lauffläche (4) gelegen ist und den Gürtel (12) bedeckt, wobei
das Band (14) ein erstes Element (42) umfasst, das durch wendelförmigen Wickelns eines ersten Streifens (58) gebildet ist, und ein zweites Element (44), das durch wendelförmiges Wickeln eines zweiten Streifens (64) gebildet ist,
**dadurch gekennzeichnet, dass**
ein Ende (70) des ersten Elements (42) innen von einem ersten Ende (36a) des Gürtels (12) in einer axialen Richtung gelegen ist, und der erste Streifen (58) zu dem ersten Ende (36a) des Gürtels (12) hin gewickelt ist und in eine Umfangsrichtung an dem ersten Ende (36a) des Gürtels (12) gewickelt ist;
das erste Element (42) an dem ersten Ende (36a) des Gürtels (12) umgeschlagen ist,
ein Ende (72) des zweiten Elements (44) innen von einem zweiten Ende (36b) des Gürtels (12) in der axialen Richtung gelegen ist, und der zweite Streifen (64) zu dem zweiten Ende (36b) des Gürtels (12) hin gewickelt ist und in der Umfangsrichtung an dem zweiten Ende (36b) des Gürtels (12) gewickelt ist;
das zweite Element (44) an dem zweiten Ende (36b) des Gürtels (12) umgeschlagen ist,
das erste Element (42) und das zweite Element (44) einander an einer Äquatorebene (CL) schneiden,
der erste Streifen (58) einen ersten Kord (60) umfasst,
in dem ersten Element (42) der erste Kord (60) sich im Wesentlichen in einer Umfangsrichtung erstreckt und wendelförmig gewickelt ist,
der zweite Streifen (64) einen zweiten Kord (66) umfasst, und
in dem zweiten Element (44) der zweite Kord (66) sich im Wesentlichen in der Umfangsrichtung erstreckt und wendelförmig gewickelt ist.

## Revendications

1. Procédé pour fabriquer un bandage pneumatique (2) en utilisant un dispositif de mise en forme incluant un tambour cylindrique (D), une première tête (H1) et une seconde tête (H2), le procédé comprenant les étapes consistant à :
enrouler une feuille autour du tambour (D) pour obtenir une ceinture (12) ;
alimenter un premier ruban (58) incluant un premier câblé (60) depuis la première tête (H1), laminer une extrémité (70) du premier ruban (58) sur la ceinture (12) au niveau d'un côté intérieur, dans une direction axiale, d'une première extrémité (36a) de la ceinture (12), alimenter un second ruban (64) incluant un second câblé (66) depuis la seconde tête (H2), et laminer une extrémité (72) du second ruban (H2) sur la ceinture (12) au niveau d'un côté intérieur, dans la direction axiale, d'une seconde extrémité (36b) de la ceinture (12) ;
enrouler en hélice le premier ruban (58) tout en déplaçant la première tête (H1) dans la direction axiale vers la première extrémité (36a) de la ceinture (12), et enrouler en hélice le second ruban (64) tout en déplaçant la seconde tête (H2) dans la direction axiale vers la seconde extrémité (36b) de la ceinture (12) ;
**caractérisé par** les étapes consistant à :
enrouler le premier ruban (58) dans une direction circonférentielle à la première extrémité (36a) de la ceinture (12) et enrouler le second ruban (64) dans la direction circonférentielle à la seconde extrémité (36b) de la ceinture (12) ;
enrouler en outre en hélice le premier ruban (58) tout en déplaçant la première tête (H1) vers l'intérieur dans la direction axiale et enrouler en outre en hélice le second ruban (64) tout en déplaçant la seconde tête (H2) vers l'intérieur dans la direction axiale ; et
enrouler le premier ruban (58) et le second ruban (64) de telle façon que le premier ruban (58) et le second ruban (64) se recoupent mutuellement à une position correspondant à un plan équatorial (CL) d'un pneumatique (2).

2. Procédé pour fabriquer un bandage pneumatique selon la revendication 1, dans lequel
une distance (W1) dans la direction axiale depuis l'extrémité (70) du premier ruban (58) laminée sur la ceinture (12) jusqu'à la première extrémité (36a) de la ceinture (12) est égale ou supérieure à 30 mm, mais égale ou inférieure à 50 mm, et
une distance (W2) dans la direction axiale depuis l'extrémité (72) du second ruban (64) laminée sur la ceinture (12) jusqu'à la seconde extrémité (36b) de la ceinture (12) est égale ou supérieure à 30 mm, mais égale ou inférieure à 50 mm.

3. Procédé pour fabriquer un bandage pneumatique selon la revendication 1, dans lequel un angle de rotation (β1, β2) du tambour (D) lors de l'enroulement du premier ruban (58) et du second ruban (64) dans la direction circonférentielle est égal ou supérieur à 180°, mais égal ou inférieur à 360°.

4. Procédé pour fabriquer un bandage pneumatique selon la revendication 1, dans lequel un module initial du premier câblé (60) est plus élevé qu'un module initial du second câblé (66).

5. Procédé pour fabriquer un bandage pneumatique selon la revendication 4, dans lequel, quand le bandage pneumatique est monté sur un véhicule, la première extrémité (36a) de la ceinture (12) est située sur un côté intérieur dans une direction en largeur du véhicule et la seconde extrémité (36b) de la ceinture (12) est située sur un côté extérieur dans la direction en largeur du véhicule.

6. Procédé pour fabriquer un bandage pneumatique selon la revendication 1, dans lequel
une largeur (RW1) du premier ruban (58) est égale ou supérieure à 10 mm mais égale ou inférieure à 11 mm, et
une largeur (RW2) du second ruban (64) est égale ou supérieure à 10 mm mais égale ou inférieure à 11 mm.

7. Procédé pour fabriquer un bandage pneumatique selon la revendication 1, dans lequel
le premier ruban (58) est enroulé en hélice à un pas (LP) qui est égal ou supérieur à 9,8 mm mais égal ou inférieur à 11,0 mm ; et
le second ruban (64) est enroulé en hélice à un pas (LP2) qui est égal ou supérieur à 9,8 mm mais égal ou inférieur à 11,0 mm.

8. Bandage pneumatique comprenant :
une bande de roulement (4) ayant une surface extérieure qui forme une surface de roulement ;
une paire de parois latérales (6) s'étendant depuis des extrémités, respectivement, de la bande de roulement (4) sensiblement vers l'intérieur dans une direction radiale ;
une paire de talons (8) situés sensiblement à l'intérieur des parois latérales (6), respectivement, dans la direction radiale ;
une carcasse (10) s'étendant sur et entre l'un des talons (8) et l'autre talon (8) le long d'une partie intérieure de la bande de roulement (4) et des parois latérales (6) ;
une ceinture (12) laminée sur la carcasse (10) sur un côté intérieur, dans la direction radiale, de la bande de roulement (4) ; et
une bande (14) située entre la ceinture (12) et la bande de roulement (4) et couvrant la ceinture (12), dans lequel
la bande (14) inclut un premier élément (42) formé en enroulant en hélice un premier ruban (58) et un second élément (44) formé en enroulant en hélice un second ruban (64),
**caractérisé en ce que**
une extrémité (70) du premier élément (42) est située à l'intérieur d'une première extrémité (36a) de la ceinture (12) dans une direction axiale, et le premier ruban (58) est enroulé vers la première extrémité (36a) de la ceinture (12) et enroulé dans une direction circonférentielle à la première extrémité (36a) de la ceinture (12) ;
le premier élément (42) est retourné vers le haut à la première extrémité (36a) de la ceinture (12),
une extrémité (72) du second élément (44) est située à l'intérieur d'une seconde extrémité (36b) de la ceinture (12) dans la direction axiale, et le second ruban (64) est enroulé vers la seconde extrémité (36b) de la ceinture (12) et enroulé dans la direction circonférentielle à la seconde extrémité (36b) de la ceinture (12) ;
le second élément (44) est retourné vers le haut à la seconde extrémité (36b) de la ceinture (12),
le premier élément (42) et le second élément (44) se recoupent mutuellement au niveau d'un plan équatorial (CL),
le premier ruban (58) inclut un premier câblé (60),
dans le premier élément (42), le premier câblé (60) s'étend sensiblement dans une direction circonférentielle et est enroulé en hélice,
le second ruban (64) inclut un second câblé (66), et
dans le second élément (44), le second câblé (66) s'étend sensiblement dans la direction circonférentielle et est enroulé en hélice.
